(19) Europäisches Patentamt
European Patent Office
Office européen des brevets

(11) **EP 4 723 730 A1**

(12) **EUROPEAN PATENT APPLICATION**

(43) Date of publication:
08.04.2026 Bulletin 2026/15

(21) Application number: 24204733.0

(22) Date of filing: 04.10.2024

(51) International Patent Classification (IPC):
*H04W 36/00* (2009.01)  *H04W 56/00* (2009.01)

(52) Cooperative Patent Classification (CPC):
H04W 36/0072; H04W 56/0045

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **Nokia Technologies Oy**
02610 Espoo (FI)

(72) Inventors:
• **KARIMIDEHKORDI, Ali**
Munich (DE)

• **MICHALOPOULOS, Diomidis**
Munich (DE)
• **DOSTI, Endrit**
Espoo (FI)
• **GOYAL, Sanjay**
Denville (US)
• **MEDINA, Daniel**
Munich (DE)

(74) Representative: **Nokia EPO representatives**
Nokia Technologies Oy
Karakaari 7
02610 Espoo (FI)

(54) **TIMING ADVANCE ACQUISITION FOR HANDOVER**

(57) Example embodiments of the present disclosure are directed to timing advance (TA) acquisition for handover. A method comprises sending, to a location service device of a core network, a request for timing alignment information of a network resource associated with a candidate target network device of a handover; receiving, from the location service device, the timing alignment information; and determining, based on the timing alignment information, timing alignment offset between the network resource and another network resource.

## Description

### FIELD

Various example embodiments of the present disclosure generally relate to the field of telecommunication and in particular, to methods, devices, apparatuses and computer readable storage medium for timing advance (TA) acquisition for handover.

### BACKGROUND

When a user equipment (UE) moves from the coverage area of one cell to another cell, a serving cell change needs to be performed at some point. Layer 1 (L1)/L2 based mobility also known as lower layer triggered mobility (LTM) has been introduced to enable a serving cell change via L1/L2 signaling. The LTM helps to reduce the latency, overhead and interruption time during handover.

### SUMMARY

In a first aspect of the present disclosure, there is provided a user device. The user device comprises at least one processor; and at least one memory storing instructions that, when executed by the at least one processor, cause the user device at least to: send, to a location service device of a core network, a request for timing alignment information of a network resource associated with a candidate target network device of a handover; receive, from the location service device, the timing alignment information; and determine, based on the timing alignment information, timing alignment offset between the network resource and another network resource.

In a second aspect of the present disclosure, there is provided a location service device of core network. The location service device comprises at least one processor; and at least one memory storing instructions that, when executed by the at least one processor, cause the location service device at least to: receive, from a user device, a request for timing alignment information of a network resource associated with a candidate target network device of a handover; and send, to the user device, the timing alignment information, wherein the timing alignment information indicates timing alignment offset between the network resource and another network resource.

In a third aspect of the present disclosure, there is provided a source network device. The source network device comprises at least one processor; and at least one memory storing instructions that, when executed by the at least one processor, cause the source network device at least to: receive, from a user device, a capability indication of the user device being capable of acquiring timing alignment information from a location service device of a core network, wherein the timing alignment information is applicable for estimating timing alignment offset between the network resource and another network resource.

In a fourth aspect of the present disclosure, there is provided a method. The method comprises: sending, at a user device to a location service device of a core network, a request for timing alignment information of a network resource associated with a candidate target network device of a handover; receiving, from the location service device, the timing alignment information; and determining, based on the timing alignment information, timing alignment offset between the network resource and another network resource.

In a fifth aspect of the present disclosure, there is provided a method. The method comprises: receiving, at a location service device of a core network from a user device, a request for timing alignment information of a network resource associated with a candidate target network device of a handover; and sending, to the user device, the timing alignment information, wherein the timing alignment information indicates timing alignment offset between the network resource and another network resource.

In a sixth aspect of the present disclosure, there is provided a method. The method comprises: receiving, at a source network device from a user device, a capability indication of the user device being capable of acquiring timing alignment information from a location service device of a core network, wherein the timing alignment information is applicable for estimating timing alignment offset between the network resource and another network resource.

In a seventh aspect of the present disclosure, there is provided a first apparatus. The first apparatus comprises means for sending, to a location service device of a core network, a request for timing alignment information of a network resource associated with a candidate target network device of a handover; and means for receiving, from the location service device, the timing alignment information; and means for determining, based on the timing alignment information, timing alignment offset between the network resource and another network resource.

In an eighth aspect of the present disclosure, there is provided a second apparatus of core network. The second apparatus comprises means for receiving, from a user device, a request for timing alignment information of a network resource associated with a candidate target network device of a handover; and means for sending, to the user device, the timing alignment information, wherein the timing alignment information indicates timing alignment offset between the network resource and another network resource.

In a ninth aspect of the present disclosure, there is provided a third apparatus. The third apparatus comprises means for receiving, from a user device, a capability indication of the user device being capable of acquiring timing alignment information from a location service device of a core network, wherein the timing alignment information is applicable for estimating timing alignment offset between the network resource and another network resource.

In a tenth aspect of the present disclosure, there is provided a computer readable medium. The computer readable medium comprises instructions stored thereon for causing an apparatus to perform at least the method according to the fourth aspect.

In an eleventh aspect of the present disclosure, there is provided a computer readable medium. The computer readable medium comprises instructions stored thereon for causing an apparatus to perform at least the method according to the fifth aspect.

In a twelfth aspect of the present disclosure, there is provided a computer readable medium. The computer readable medium comprises instructions stored thereon for causing an apparatus to perform at least the method according to the sixth aspect.

In a thirteenth aspect of the present disclosure, there is provided a user device. The user device comprises at least one processor; and at least one memory storing instructions that, when executed by the at least one processor, cause the user device at least to: receive timing alignment information of a network resource; determine, based on the timing alignment information, timing alignment offset between the network resource and another network resource; and perform timing advance estimation for the network resource at least partially based on the timing alignment offset.

In a fourteenth aspect of the present disclosure, there is provided a network device. The network device comprises at least one processor; and at least one memory storing instructions that, when executed by the at least one processor, cause the network device at least to: send, to a user device, timing alignment information of a network resource, to enable the user device to perform a timing advance estimation for the network resource at least partially based on the timing alignment information, wherein the timing alignment information indicates timing alignment offset between the network resource and another network resource.

In a fifteenth aspect of the present disclosure, there is provided a method. The method comprises: receiving, at a user device, timing alignment information of a network resource; determining, based on the timing alignment information, timing alignment offset between the network resource and another network resource; and performing timing advance estimation for the network resource at least partially based on the timing alignment offset.

In a sixteenth aspect of the present disclosure, there is provided a method. The method comprises: sending, from a network device to a user device, timing alignment information of a network resource, to enable the user device to perform a timing advance estimation for the network resource at least partially based on the timing alignment information, wherein the timing alignment information indicates timing alignment offset between the network resource and another network resource.

In a seventeenth aspect of the present disclosure, there is provided a first apparatus. The first apparatus comprises means for receiving timing alignment information of a network resource; means for determining, based on the timing alignment information, timing alignment offset between the network resource and another network resource; and means for performing timing advance estimation for the network resource at least partially based on the timing alignment offset.

In an eighteenth aspect of the present disclosure, there is provided a second apparatus. The second apparatus comprises means for sending, to a user device, timing alignment information of a network resource, to enable the user device to perform a timing advance estimation for the network resource at least partially based on the timing alignment information, wherein the timing alignment information indicates timing alignment offset between the network resource and another network resource.

In a nineteenth aspect of the present disclosure, there is provided a computer readable medium. The computer readable medium comprises instructions stored thereon for causing an apparatus to perform at least the method according to the fifteenth aspect.

In a twentieth aspect of the present disclosure, there is provided a computer readable medium. The computer readable medium comprises instructions stored thereon for causing an apparatus to perform at least the method according to the sixteenth aspect.

In a twenty-first aspect of the present disclosure, there is provided a user device. The first apparatus comprises at least one processor; and at least one memory storing instructions that, when executed by the at least one processor, cause the user device at least to: receive, from a source network device, timing alignment information of a network resource associated with a candidate target network device of a handover; determine, based on the timing alignment information, timing alignment offset between the network resource and another network resource; and perform timing advance estimation for the network resource at least partially based on the timing alignment offset.

In a twenty-second aspect of the present disclosure, there is provided a source network device. The second apparatus comprises at least one processor; and at least one memory storing instructions that, when executed by the at least one processor, cause the source network device at least to: send, to a user device, timing alignment information of a network resource associated with a candidate target network device of a handover, to enable the user device to perform the timing advance estimation for the network resource, wherein the timing alignment information indicates timing alignment offset between the network resource and another network resource.

In a twenty-third aspect of the present disclosure, there is provided a second network device. The third apparatus comprises at least one processor; and at least one memory storing instructions that, when executed by the at least one processor, cause the second network device at least to: receive, from a first network device, a request for timing alignment information of a network resource; and send, to the first network device, the timing alignment information, wherein the timing alignment information indicates timing alignment offset between the network resource and another network resource.

In a twenty-fourth aspect of the present disclosure, there is provided a method. The method comprises: receiving, at a user from a source network device, timing alignment information of a network resource associated with a candidate target network device of a handover; determining, based on the timing alignment information, timing alignment offset between the network resource and another network resource; and performing timing advance estimation for the network resource at least partially based on the timing alignment offset.

In a twenty-fifth aspect of the present disclosure, there is provided a method. The method comprises: sending, to a user device from a source network device, timing alignment information of a network resource associated with a candidate target network device of a handover, to enable the user device to perform the timing advance estimation for the network resource, wherein the timing alignment information indicates timing alignment offset between the network resource and another network resource.

In a twenty-sixth aspect of the present disclosure, there is provided a method. The method comprises: receiving, at a second network device from a first network device, a request for timing alignment information of a network resource; and sending, to the first network device, the timing alignment information, wherein the timing alignment information indicates timing alignment offset between the network resource and another network resource.

In a twenty-seventh aspect of the present disclosure, there is provided a first apparatus. The first apparatus comprises means for receiving, from a source network device, timing alignment information of a network resource associated with a candidate target network device of a handover; means for determining, based on the timing alignment information, timing alignment offset between the network resource and another network resource; and means for performing timing advance estimation for the network resource at least partially based on the timing alignment offset.

In a twenty-eighth aspect of the present disclosure, there is provided a second apparatus. The second apparatus comprises means for sending, to a user device, timing alignment information of a network resource associated with a candidate target network device of a handover, to enable the user device to perform the timing advance estimation for the network resource, wherein the timing alignment information indicates timing alignment offset between the network resource and another network resource.

In a twenty-ninth aspect of the present disclosure, there is provided a third apparatus. The third apparatus comprises means for receiving, from a first network device, a request for timing alignment information of a network resource; and means for sending, to the first network device, the timing alignment information, wherein the timing alignment information indicates timing alignment offset between the network resource and another network resource.

In a thirtieth aspect of the present disclosure, there is provided a computer readable medium. The computer readable medium comprises instructions stored thereon for causing an apparatus to perform at least the method according to the twenty-fourth aspect.

In a thirty-first aspect of the present disclosure, there is provided a computer readable medium. The computer readable medium comprises instructions stored thereon for causing an apparatus to perform at least the method according to the twenty-fifth aspect.

In a thirty-second aspect of the present disclosure, there is provided a computer readable medium. The computer readable medium comprises instructions stored thereon for causing an apparatus to perform at least the method according to the twenty-sixth aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will now be described with reference to the accompanying drawings, where:

FIG. 1 illustrates an example communication environment in which example embodiments of the present disclosure can be implemented;

FIG. 2 illustrates an example signaling flow for inter-distributed unit (DU) LTM;

FIG. 3 illustrates a timing example for a UE connected to 2 non-collocated transmission and reception points (TRPs);

FIG. 4 illustrates an example signaling flow of TA acquisition according to some example embodiments of the present disclosure;

FIG. 5 illustrates another example signaling flow of TA acquisition according to some example embodiments of the present disclosure;

FIG. 6 illustrates a further example signaling flow of TA acquisition according to some example embodiments of the present disclosure;

FIG. 7 illustrates an example signaling flow of inter-Centralized Unit (CU) coordination for timing alignment information exchange according to some example embodiments of the present disclosure;

FIG. 8 illustrates an example signaling flow of timing alignment information acquisition from a core network according to some example embodiments of the present disclosure;

FIG. 9 illustrates another example signaling flow of timing alignment information acquisition from a core network according to some example embodiments of the present disclosure;

FIG. 10 illustrates a flowchart of a method implemented at a user device in accordance with some example embodiments of the present disclosure;

FIG. 11 illustrates a flowchart of a method implemented at a location service device of a core network in accordance with some example embodiments of the present disclosure;

FIG. 12 illustrates a flowchart of a method implemented at a source network device in accordance with some example embodiments of the present disclosure;

FIG. 13 illustrates a flowchart of a method implemented at a user device in accordance with some example embodiments of the present disclosure;

FIG. 14 illustrates a flowchart of a method implemented at a network device in accordance with some example embodiments of the present disclosure;

FIG. 15 illustrates a flowchart of a method implemented at a user device in accordance with some example embodiments of the present disclosure;

FIG. 16 illustrates a flowchart of a method implemented at a source network device in accordance with some example embodiments of the present disclosure;

FIG. 17 illustrates a flowchart of a method implemented at a second network device in accordance with some example embodiments of the present disclosure;

FIG. 18 illustrates a simplified block diagram of a device that is suitable for implementing example embodiments of the present disclosure; and

FIG. 19 illustrates a block diagram of an example computer readable medium in accordance with some example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a user device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), 5.5G, the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a user device accesses the network and receives services therefrom. The network device may comprise a network device of an access network including a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, the access network may utilize a radio access network (RAN) split architecture where the network device of the access network device includes a Centralized Unit (CU) and a Distributed Unit (DU).

The network device may also comprise a network device of a core network including Examples of core network nodes may include functions of one or more of a Mobility Management Entity (MME), an evolved Packet Data Gateway (ePDG), a Home Subscriber Server (HSS), an Access and Mobility Management Function (AMF), a Session Management Function (SMF), a Network Slice Selection Function (NSSF), a Serving Gateway (SGW), a Packet Gateway (PGW), an Authentication Server Function (AUSF), a Subscription Identifier De-concealing function (SIDF), a Unified Data Management (UDM), a Security Edge Protection Proxy (SEPP), a Network Exposure Function (NEF), and/or a User Plane Function (UPF).

The term "user device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The user device may also correspond to a Mobile Termination (MT) part of an IAB node (e.g., a relay node). In the following description, the terms "terminal device", "user device", "user equipment" and "UE" may be used interchangeably.

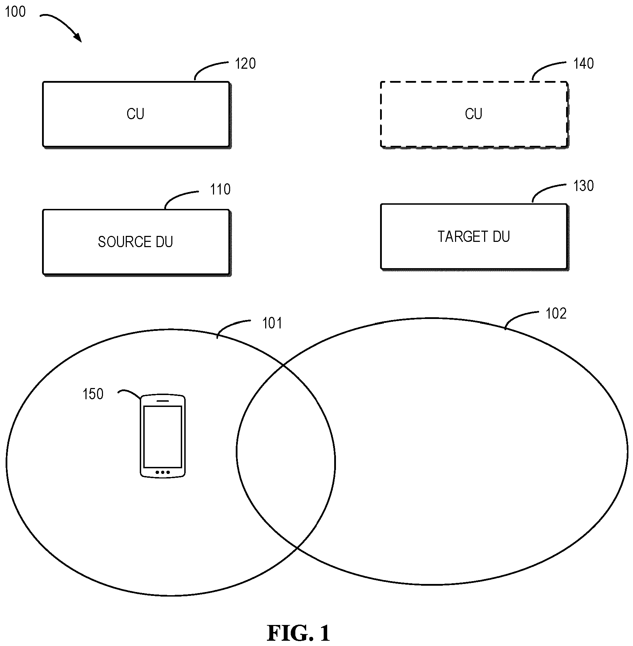

FIG. 1 illustrates an example communication environment 100 in which example embodiments of the present disclosure can be implemented. In the communication environment 100, there may be a user device 150 (such as a UE). The user device 150 is in a current serving cell 101 (also referred to as "source cell 101") which is provided by a DU 110 (also referred to as "source DU 110"). There may be candidate target cells to which the user device 150 may be handed over to, for example, the cell 102 (also referred to as "candidate target cell" or "target cell" 102). As shown in FIG. 1, the target cell 102 may be provided by the DU 130 (also referred to as "target DU 130"). In some example embodiments, in an intra-CU scenario, the source DU 110 and the target DU 130 may share or belong to the same CU 120. In some other example embodiments, in an inter-CU scenario, the source DU 110 belongs to the CU 120 (referred to as "source CU 120" in the inter-CU scenario) and the target DU 130 belongs to the CU 140 (referred to "target CU 140" in the inter-CU scenario). The source DU and the source CU may form a source random access network (RAN) device, for example, a source base station, and the target DU and the target CU may form a target RAN device of a handover, for example, a target base station of a handover.

In some example embodiments, a link from the source DU 110 or the target DU 130 to the user device 150 is referred to as a downlink (DL), and a link from the user device 150 to the source DU 110 or the target DU 130 is referred to as an uplink (UL). In DL, the source DU 110 or the target DU 130 is a transmitting (TX) device (or a transmitter) and the user device 150 is a receiving (RX) device (or a receiver). In UL, the user device 150 is a TX device (or a transmitter) and the source DU 110 or the target DU 130 is a RX device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

As mentioned above, LTM has been introduced. LTM, denoted also as L1/2 inter-cell mobility, is one of the objectives for mobility enhancement in Release (Rel) 18. The decision about the cell change is based on L1 measurements and is made in the MAC layer in the DU.

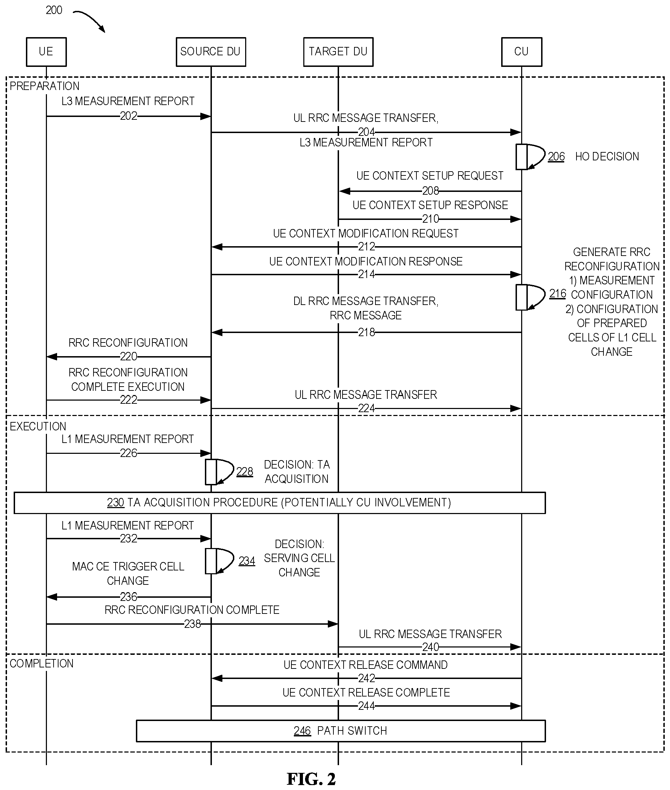

FIG. 2 shows an example signaling flow 200 of message exchange for the inter-DU LTM scenario. As shown, a UE provides (202), to a source DU, L3 measurements which are forwarded (204) to a CU. Based on these measurements, the CU decides (206) about the cell preparation. The CU then sends (208) a UE context setup request to a target DU and receives (210) a UE context setup response from the target DU, in order to set up the UE context in the target DU. The CU communicates (212 and 214) with the source DU for the modification of the UE context if needed and the provision of the target cell information, e.g., target cell channel state information (CSI) resource configuration, transmission configuration indicator (TCI) states, etc.

The CU creates (216) and forwards (220) the RRC Reconfiguration message to the source DU using a DL RRC Message Transfer. The source DU then forwards (220) it to the UE. The UE responds (222) with an RRC Reconfiguration Complete to the source DU, which responds (224) to the CU with the UL RRC message transfer.

Based on its configuration, the UE provides (226) the L1 reports to the source DU. Based on the received L1 measurement report, the source DU may trigger (228) the UE to acquire TA for the set of candidate cells (i.e., candidate cells for the handover target cell), and a TA acquisition procedure is performed (230). Currently, two approaches have been considered for TA acquisitions.

An approach is Random Access (RA) based TA acquisition. In this approach, the network through physical downlink control channel (PDCCH) order configure the UE to send the RA toward the target cell. The target cell determines the TA value and informs it to the source cell. The source cell, then sends the TA value (of the target-cell) together with handover command, for example, a medium access control (MAC) control element (CE).

Another approach is UE based TA acquisition (without RA). In this approach, without performing RA transmission, the UE (by using additional information provided by the network) estimates the TA of target-cell e.g., by calculating receive time difference (RTD) between the serving and target-cell.

Continuing with FIG. 2, the UE continues L1 measurement reporting (232) to the source DU. Once the source DU decides (234) that the UE should be handed over to a cell (i.e., target cell) of another DU (i.e., target DU), it triggers (236) the cell switch, using a cell switch command (e.g., a MAC CE). The cell switch command may also contain the TA of the target cell.

Then the UE applies the RRC configuration for the target cell of target DU-indicated by the cell switch command (via MAC CE) and switches to the target DU. The UE may be configured to perform RA to the target cell if the TA is not available at the UE side or MAC CE command did not include the TA value of the target cell (this is one option which is not shown in FIG. 2).

To initiate the communication with the target DU, the UE transmits (238) an RRC Reconfiguration Complete using already configured UL resources to the target cell of target DU, which is forwarded (240) to the CU by an UL RRC message transfer.

The CU releases (242 and 244) the UE context from the source DU with a UE Context Release Request and a UE context Release Response. The CU then performs (246) Path Switch to the target DU.

The procedure shown in FIG. 2 describes the LTM procedure for intra-CU scenario which is the objective of the Release 18 Mobility Work Item Description (WID). Inter-CU scenario is not investigated in Release 18 and it is expected that the inter-CU LTM will be investigated as Release 19 Mobility Enhancement WID.

Timing Alignment Error (TAE) or timing alignment offset/error refers to relative difference in time of transmission of the simultaneous signals between any pair of two TRPs. For example, as defined in technical specification (TS), the maximum TAE shall not exceed 3000 ns.

In TS, the requirement for TAE is specified for different use cases (CA, DC, etc.). The hardware needed for a High Precision time clock in any TRP in the network might be relatively expensive. Hence the synchronization between TRPs could rely on physical cable connection that have a sudden precision.

It is important to note that the TS only describes a maximum requirement for TAE. As such, the specified TAE is only a maximum value that the TRPs need to fulfil, i.e., the TAE between any pair of TRPs must be below or equal to the specified requirement. Nevertheless, in many occasions the TRPs are not that far apart and the realized TAE may be much smaller than the specified requirement. As used herein, the realized TAE refers to the TAE in realistic deployments. Note that the current specification does not give any indication on the realized TAE.

In another aspect, timing advance may be calculated based on Receive Time difference (RTD). Different solutions have been discussed to initialize the TA loop for a "new" TRP without utilizing the random access channel (RACH) procedure. This is relevant for multi-TRP (mTRP) initialization as well as for L1 mobility to reduce the overhead introduced when using RACH procedure.

One of the solutions to initialize the TA loop for a "new" TRP (or cell) without utilizing the RACH procedure is to calculate the "new" TA value based on the TA value of an already connected TRP (or a current serving cell) and the RTD between the TRPs. The discussions so far have been assuming ideal TRP reference time synchronization, TAE=0.

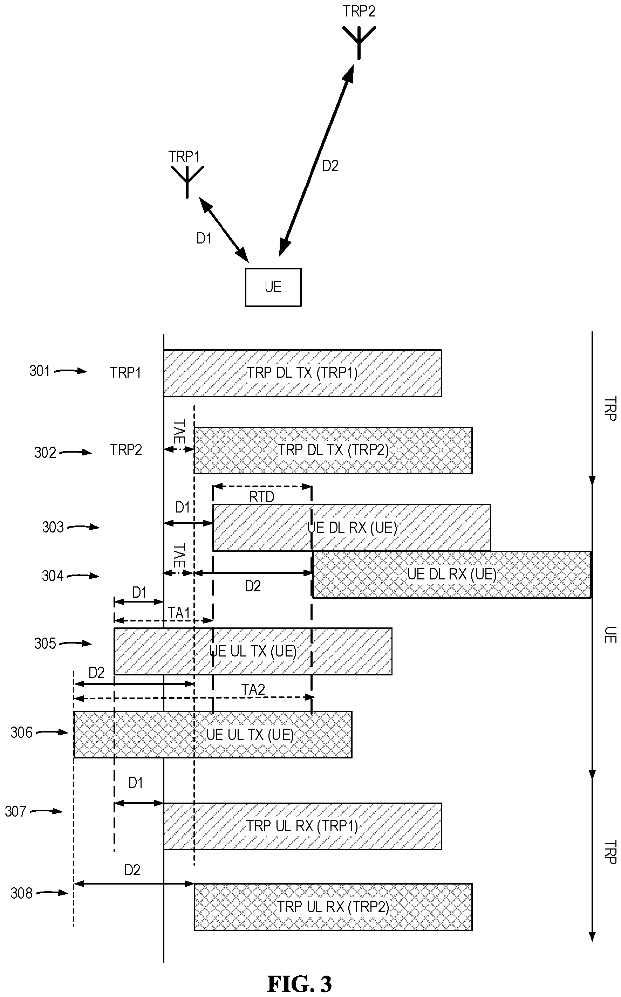

FIG. 3 shows a timing example for a UE connected to 2 non-collocated TRPs including TRP1 and TRP2. The one-way propagation delays between each of the two TRPs and the UE are D1 and D2 for TRP1 and TRP2, respectively.

The schematic diagrams 301 and 302 illustrate the reference DL transmit time for the two TRPs. The signal transmitted from TRP2 is delayed by the TAE when compared to the signal transmitted from TRP1.

The schematic diagrams 303 and 304 illustrate the reception at the UE of the signals from the two TRPs. The signal from TRP1 is received at the UE D1 ns later than it was transmitted from TRP1. Similarly, the signal from TRP2 is received at the UE D2 ns later than it was transmitted from TRP2. The UE RTD between the two signals may be estimated by the UE based on the DL RS from the two TRPs.

The schematic diagrams 305 and 306 illustrate the UE transmit time for the 2 signals sent to TRP1 and TRP2, assuming that the UE has already obtained the correct TA for both links. The TA for TRP1 is TA1=2*D1, and the TA for TRP2 is TA2=2*D2.

The schematic diagram 307 illustrates the UL signal reception at TRP1, which is aligned with the DL transmit signal from TRP1 as in the schematic diagram 301. The schematic diagram 308 illustrates the UL signal reception at TRP2, which is aligned with the DL transmit signal from TRP2 as the schematic diagram 302.

From FIG.3, it is observed that Timing Advance for the second TRP2 (denoted as TA2) is equal to:

$$TA2 = TA1 + 2\,RTD - 2Realized\,(TAE)\quad(1)$$

where *Realized* (*TAE*) represents the realized TAE. In the case of ideal synchronisation between the TRPs (i.e. the realized TAE=0), the UE may estimate correctly the TA2 based on TA1 and the observed RTD. However, in real deployments, TA2 cannot be calculated neither at the gNB (because the gNB doesn't know the RTD) nor at the UE (because the UE doesn't know the realized TAE). As such, if the realized TAE is not equal to zero and not known at the UE, then the UE cannot precisely estimate TA2 and the resulting UL time alignment on TRP2 will then be equal to the realized TAE.

In Release 18 LTM, the configuration for UE-based TA is provided by source gNB in LTM Configuration (for example LTM-Config IE) and LTM-Candidate IE. Ifltm-UE-MeasuredTA-ID of a candidate cell (given in the LTM-Candidate IE) and ltm-ServingCellUE-MeasuredTA-ID of the serving cell (given in the LTM-Config IE) are provided to a UE and have same value, then the UE estimates based on the UE implementation a timing advance to apply from a first transmission on the candidate cell that is after the reception of a cell switch command for the candidate cell

The corresponding change in the specification [TS38.331] is shown in Table 1.

Table 1

5.3.5.18.6　　LTM cell switch execution

…

1> if the *LTM-Candidate IE* in *ltm-Config* indicated by lower layers or for the selected cell in accordance with 5.3.7.3 contains the field *ltm-UE-MeasuredTA-ID*:

　2>if the value of *ltm-UE-MeasuredTA-ID* is not equal to the value of *ltm-ServingCellUE-MeasuredTA-ID* within *VarLTM-ServingCellUE-MeasuredTA-ID*:

　　3>replace the value of *ltm-ServingCellUE-MeasuredTA-ID* in *VarLTM-ServingCellUE-MeasuredTA-ID* with the value received within *ltm-UE-MeasuredTA-ID*;

　　3>for each *LTM-Candidate IE* in *ltm-Config*:

　　　4>if the value of *ltm-UE-MeasuredTA-ID* within *LTM-Candidate IE* is equal to the value of *ltm-ServingCellUE-MeasuredTA-ID* within *VarLTM-ServingCellUE-MeasuredTA-ID*:

　　　　5>inform lower layers that UE is configured with UE-based TA measurements for the *LTM-Candidate*;

　　　4>else:

　　5> inform lower layers that UE is not configured with UE-based TA measurements for the *LTM-Candidate*.

It is also specified in TS 38.213 at section 21 as shown in Table 2.

Table 2

21 L1/L2-triggered mobility procedures

...

*ltm-UE-MeasuredTA-ID* of a candidate cell and *ltm-ServingCellUE-MeasuredTA-ID* of the serving cell are provided to a UE and have same value, the UE estimates based on the UE implementation a timing advance to apply from a first transmission on the candidate cell that is after the reception of a cell switch command for the candidate cell [11, TS 38.321].

...

In the case of UE-based TA acquisition, the UE is expected to be informed about the TAE (or timing offset) value of the two cells (especially if the TAE is greater than specific threshold, e.g., 265ns), for which it is configured to calculate the TA. Specially for inter-CU handovers, the TAE value might be considerable. In additions due to clock jitter and other factors (such as RF/baseband impairments) the provided TAE is not fixed and may vary over time. This requires appropriate method to acquire and handle the validity of timing alignment difference between cells, especially in inter-CU scenario as cells belong to different CUs may use different oscillators and/or synchronization procedures, which have not been investigated in detail.

In accordance with some example embodiments of the present disclosure, there is provided a solution for TA acquisition for handover, especially for inter-CU handover. According to example embodiments of the present disclosure, a network device may provide a user device with timing alignment information of a network resource. The network device may be a RAN device or a core network device. The network resource may include a cell (for example, a candidate cell), a TRP, or a beam group, etc. The user device may perform TA estimation for the network resource at least partially based on the timing alignment information. For example, timing alignment offset between the network resource and another network resource is determined based on the timing alignment information, and the TA estimation may be performed based on the timing alignment offset. In example embodiments of the present disclosure, the timing advance for the network resource is estimated by taking the timing alignment error or offset into consideration. In this way, the accuracy of TA estimation for handover can be improved.

Example embodiments of the present disclosure will be described in detail below with reference to the accompanying drawings.

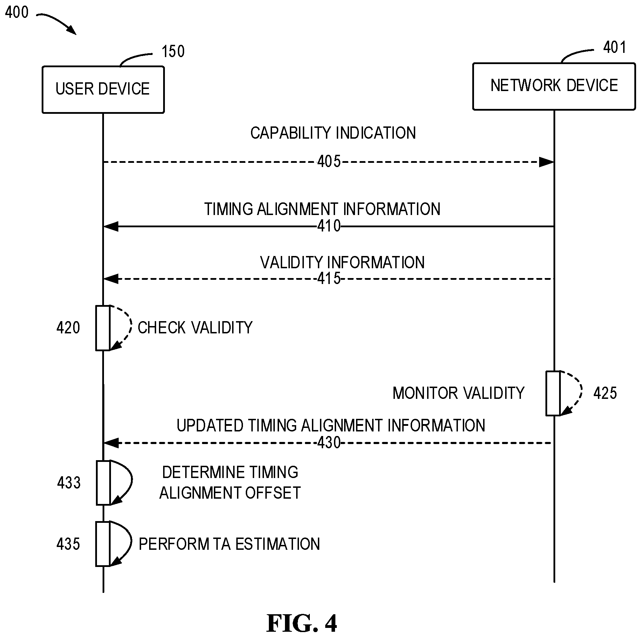

Reference is now made to FIG. 4, which illustrates an example signaling flow 400 of TA acquisition according to some example embodiments of the present disclosure. The signaling flow 400 involves the user device 150 and a network device 401, which may be an RAN device or a core network device.

As shown in FIG. 4, the user device 150 receives (410) timing alignment information (which is also referred to as synchronicity information) of a network resource from the network device 401. In the following, the network resource for which the timing alignment information is acquired or for which TA estimation is to be performed may be also referred to as a "candidate network resource" or a network resource to be estimated merely for purpose of illustration without any limitation.

The network resource may include any form of resources provided by the network for communication. For example, the network resource may include a cell, a TRP, a beam or a beam group, etc. In the case of handover, the network resource for which TA estimation is to be performed may include a candidate cell, a candidate TRP, a candidate beam or a candidate beam group. In the following, some example embodiments are described with respect to the cell. However, this is merely for purpose of illustration without any limitation. Example embodiments described with the cell are applicable to any type of network resources, for example, the TRP, the beam, beam group and/or the like.

The timing alignment information may comprise any information related to timing alignment. In some example embodiments, the timing alignment information may indicate a timing alignment offset or timing alignment error between the candidate network resource and another network resource. For example, the timing alignment information may indicate a timing alignment offset between the candidate network resource and a serving network resource of a source network device of a handover. Alternatively, or in addition, the timing alignment information may indicate a timing alignment offset between the candidate network resource and a synchronization reference (also referred to as a reference synchronization point), such as a Global Navigation Satellite System (GNSS).

The timing alignment information may indicate the timing alignment offset in an explicit or implicit way. In an example, the timing alignment information may directly indicate a value of the timing alignment offset. In another example, the timing alignment information may comprise information from which the timing alignment offset may be derived or calculated.

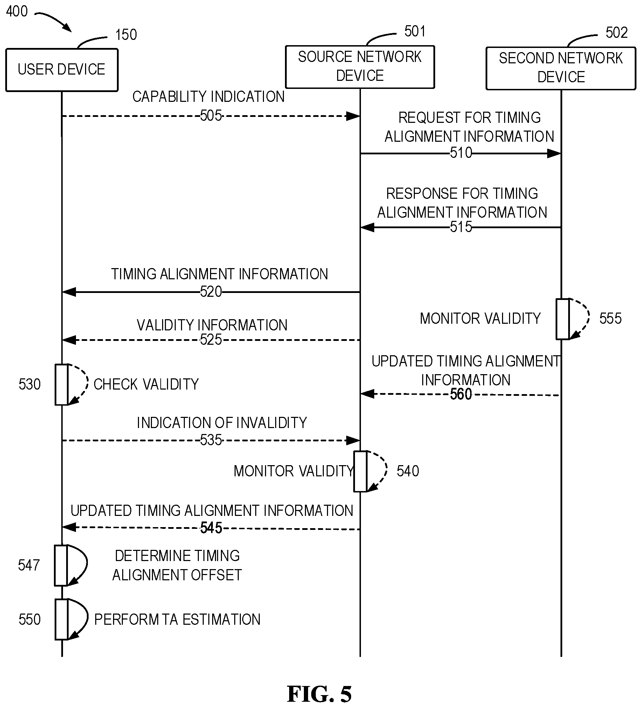

In some example embodiments, the candidate network resource may be associated with a candidate target network device of a handover, and the timing alignment information may be received from a source network device of the handover. In this case, the network device 401 may include the source network device, for example, a source CU and/or a source DU. Such example embodiments will be described in detail with reference to FIG. 5.

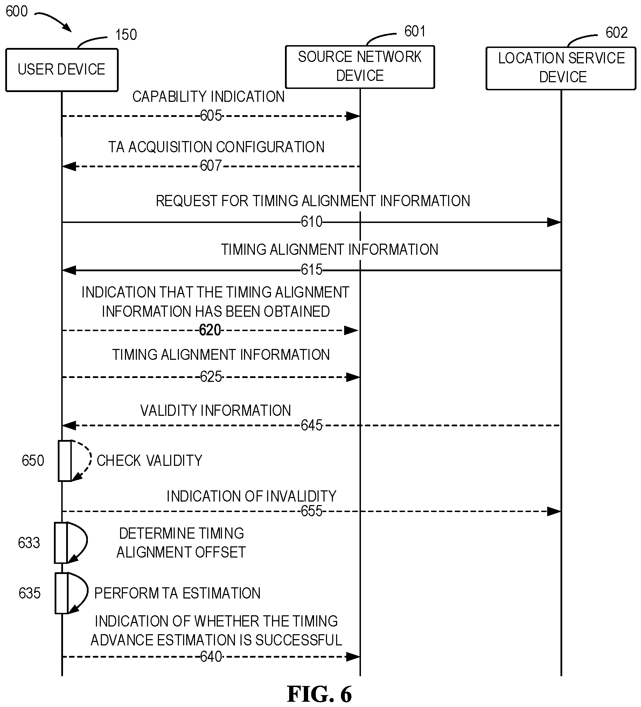

In some example embodiments, the timing alignment information may be received from a location service device of a core network. For example, the location service device may implement an application management function (AMF) in the core network. Such example embodiments will be described in detail with reference to FIG. 6.

Based on the timing alignment information, the user device 150 determines (433) timing alignment offset between the network resource and another network resource. The network resource and the other network resource may be a candidate target cell and a source cell of a handover, respectively. For example, a timing alignment offset between the network resource and a serving network resource of a source network device of the handover may be determined. For another example, the timing alignment offset between the network resource and a synchronization reference (such as a GNSS) may be determined.

The user device 150 performs (435) TA estimation for the candidate network resource at least partially based on the timing alignment offset that is determined based on the timing alignment information. For example, the candidate network resource may include a first TRP of a candidate target cell for a handover, and the timing alignment information may include the realized TAE between the first TRP and a second TRP of a source cell for the handover. The user device 150 may estimate the TA for the first TRP according to the formula (1) described above.

In some example embodiment, the user device 150 may further receive supplementary information about the timing alignment offset, including, for example, information about at least one of accuracy, validity, variation or update of the timing alignment information. The supplementary information may be received from the network device 401 or another network device. For example, the supplementary information may indicate the accuracy, validity, or variation of synchronicity status or TAE values of the candidate network resource over time. In some example embodiments, the supplementary information may be included in the timing alignment information.

In some example embodiments, the supplementary information may include one or more validity conditions of the timing alignment information. For example, the user device 150 may receive (415) information about at least one validity condition of the timing alignment information from the network device 401 or another network device. The user device 150 may check (420) validity of the timing alignment information based on the at least one validity condition. If the timing alignment information is valid, the user device 150 may perform the TA estimation based on the timing alignment offset that is determined based on the timing alignment information. In some example embodiments, if the timing alignment information is invalid, the user device 150 may request the network device 401 or another network device to update the timing alignment information.

In some example embodiments, the network device 401 may monitor (425) validity of the timing alignment information. The network device 401 may monitor the validity in any suitable manner. In some example embodiments, the validity may be monitored based on a timer.

If the timing alignment information is invalid, the network device 401 may send (430), to the user device 150, updated timing alignment information of the candidate network resource. Accordingly, the timing alignment offset may be updated based on the updated timing alignment information, and the TA estimation may be performed (435) at least partially based on the updated timing alignment offset that is determined from the updated timing alignment information.

In some example embodiments, the user device 150 may send (405), to a network device, a capability indication of the user device 150 being capable of performing timing advance estimation based on a receive time difference. Although FIG. 4 shows that the capability indication is sent to the network device 401, it is merely an example without any limitation. This capability indication may be sent to the network device 401, for example, if the network device 401 is a source network device. Alternatively, this capability indication may be sent to another network device. For example, if the network device 401 is a location service device in a core network, the capability indication may be sent to a source network device. The capability indication may be included in any suitable signaling. For example, this capability indication may be included in a capability report from the user device 150 to its serving DU.

As mentioned with reference to FIG. 4, in some example embodiments, the timing alignment information may be received from a source network device of a handover. Reference is now made to FIG. 5 to illustrate such example embodiments.

FIG. 5 illustrates an example signaling flow 500 of TA acquisition according to some example embodiments of the present disclosure. The signaling flow 500 involves the user device 150, a source network device 501 and a second network device 502. The signaling flow 500 may be considered as an example of the signaling flow 400, and the source network device 501 may be considered as an example of the network device 401. The source network device 501 may be a serving network device for the user device 150.

In some example embodiments, the source network device 501 may include a source RAN node of a handover, and the source RAN node may include at least one of a source CU, or a source DU. In some example embodiments, the second network device 502 may include a candidate target RAN node which may include at least one of a candidate target CU or a candidate target DU. In the following, the candidate target RAN node, the candidate target CU and the candidate target DU may be referred to as a target RAN node, a target CU and a target DU respectively merely for purpose of illustration without any limitation. In some example embodiments, the second network device 502 may include a location service device in a core network, for example an AMF.

As shown in FIG. 5, in some example embodiments, the user device 150 may send (505), to the source network device 501, a capability indication of the user device 150 being capable of performing timing advance estimation based on a RTD. In some embodiments, the source network device 501 may send the capability indication to the second network device 502. For example, the source CU may inform the target-CU about the UE's capability to estimate TA based on RTD. In some example embodiments, the capability indication of the user device 150 may be sent to the second network device 502 in a context setup request for the user device 150, for example, a UE context setup request.

In some example embodiments, the source network device 501 may send (510), to the second network device 502, a request for timing alignment information of a network resource associated with a candidate target network device of a handover. As described with reference to FIG. 4, the network resource for which the timing alignment information is requested may be referred to as a candidate network resource. The candidate target network device, which may be referred to as a target network device, may include a target RAN node, for example, a target DU. The candidate network resource may include for example a candidate target cell, a TRP of the candidate target cell, or a beam group of the candidate target cell etc.

In some example embodiments, the request may indicate or include a list of potential network resources for which timing alignment information is requested. For example, the source CU may provide the target CU with an indication of the network resources (for example, the cells, the TRPs or the beam groups) for which knowledge of the timing alignment offset is desirable and requests timing alignment offset status.

The request for the timing alignment information may request for any information related to the timing alignment. In some example embodiments, the request may include a request on whether a pair of network resources are synchronized with each other, the pair of network resources including the candidate network resource. For example, the request may include an (implicit) indication for timing alignment information requests between the target cell and the serving cell.

In another example, to support subsequent LTM, a list of multiple target cells (for example, cells belonging to different CUs) may be provided as a set of network resource pairs. Each pair includes two network resources (for example, two cells, two TRPs, two beam groups or beam pairs) for which the timing alignment offset needs to be calculated with respect to each other. For example, a set of cell pairs may be provided as: (servingCelll, targetCell1), (servingCell1, targetCell2), (servingCell2, targetCell3).

Alternatively, or in addition, the request may include a request on whether the network resource is synchronized with a synchronization reference. In an example, the request may include an (implicit) indication for timing alignment information requests between the target cell and a source synchronization reference. For example, this indication may be the UE's capability of performing RTD-based TA estimation, which is sent as part of the UE context. In another example, the source network device 501 may provide, in the request, a list of cells, e.g., targetCell1, targetCell2, and targetCell3, for which the timing alignment information needs to be provided (with respect to one cell, e.g., ServingCell1, or a reference synchronization point, e.g., Global Navigation Satellite System, GNSS).

Alternatively, or in addition, the request may include a request for an un-synchronicity value between the pair of network resources. For example, the source network device 501 may request timing alignment status for the candidate network resource. In an example, the request may only include whether network resources (for example, cell pairs, TRP pairs, or beam pairs) are synchronized with each other within a certain threshold (e.g., certain period). In another example, if the cells are unsynchronized, the source network device 501 may request the value (or range value) of un-synchronicity (i.e., timing alignment offset) between network resources in a network resource pair, for example, a cell pair, a TRP pair.

Alternatively, or in addition, the request may include a request for an un-synchronicity value of the network resource with the synchronization reference. In an example, the request may only include whether network resources (for example, cell pairs, TRP pairs, or beam pairs) are synchronized compared to a synchronization reference point within a certain threshold (e.g., certain period).

Alternatively, or in addition, the request may include a request for at least one of accuracy, validity, variation or update of the timing alignment information. For example, the source network device 501 may request the accuracy, the validity, or the variation of synchronicity status or values (for example, TAE values) of the candidate network resource over time.

In some example embodiments, the request for the at least one of accuracy, validity, variation or update of the timing alignment information may include at least one of: a request for a notification that a timing alignment error of the network resource is greater than a threshold error, or a request for a periodic notification of the timing alignment information. For example, the source CU may request the target CU to inform the source-CU if the synchronicity status or values exceed a certain threshold for a certain set of cell pairs or with respect to a reference synchronization point. For another example, the source CU may request the target CU to periodically send the synchronicity information to the source CU (for a certain duration or during the HO procedure).

In some example embodiments, the source network device 501 may send, to the second network device 502, information about synchronicity status of a serving network resource, to assist the second network device 502 in evaluation of the timing alignment information of the candidate network resource. The information about the synchronicity status of the serving network resource may be sent to the second network device separately from or together with the request for the timing alignment information.

In an example, the source CU may initially share the synchronicity status of some cells (e.g., serving cell synchronicity status with respect to a synchronization reference point) with the target-CU to facilitate the evaluation of synchronicity status between two cells. For example, the target-CU may identify that the target cell and the source cell are synchronized if they are both synchronized with a synchronization reference point.

In some example embodiments, the second network device 502 may determine the timing alignment information (for example at least the timing alignment offset between the candidate network resource and another network resource) by coordinating with another network device. In some example embodiment, the second network device 502 may include a candidate target network device of a handover. In an example, the candidate target network device may include a target CU. The target CU may determine the timing alignment information by coordination with a target DU. For example, the target-CU, if needed, exchanges the requested information with the target DU/cell and informs the source-CU about the requested timing alignment offset information.

Then, the second network device 502 may send (515) the timing alignment information to the source network device 501. For example, the timing alignment information may be included in a response to the request for the timing alignment information.

Correspondingly, the source network device 501 may obtain the timing alignment information from the second network device as a response to the request for the timing alignment information. In some example embodiments, the timing alignment information may indicate a timing alignment offset between a network resource of the source network device 501 and the network resource associated with the target network device, for example, the second network device 502.

In the above example embodiments, the timing alignment information is obtained from the second network device 502. In some example embodiments, the source network device 501 may determine the timing alignment information. For example, the source network device 501 may include a source CU. The source CU may receive, from a source DU, timing alignment information of a plurality of network resources, and then determine the timing alignment information of the candidate network resource from the received timing alignment information of the plurality of network resources. For example, if needed, the source CU may collect or coordinate synchronicity information from the source-DU to calculate timing alignment offset between cells.

Continuing with the signaling flow 500, after obtaining the timing alignment information, the source network device 501 sends (520) the timing alignment information of the candidate network resource to the user device 150, where the timing alignment information indicates timing alignment offset between the network resource and another network resource. The user device 150 may determine (547) a timing alignment offset between the network resource and another network resource based on the timing alignment information. The user device 150 may perform (550) TA estimation for the candidate network resource at least partially based on the timing alignment offset.

In some example embodiments, the user device 150 may check (530) validity of the timing alignment information before performing the TA estimation. Based on determining that the timing alignment information is valid, the user device 150 may perform (550) the TA estimation based on the timing alignment offset that is determined based on the timing alignment information.

In some example embodiments, the source network device 501 may send (525) to the user device 150 information (which is also referred to as validity information) about at least one validity condition of the timing alignment information. In such example embodiments, checking of the validity of the timing alignment information may be at least partially based on the at least one validity condition. In an example, the source-CU may share information on the validity or variation conditions of the provided timing alignment offset information. In such a scenario, the UE may be responsible for checking the validity, and if the provided timing alignment information is valid, then the UE may estimate the TA.

In some example embodiments, the validity of the timing alignment information may be determined based on a validity timer. For example, the user device 150 may run the validity timer. Alternatively, or in addition, the validity of the timing alignment information may be determined based on a comparison between a threshold strength and a measured signal strength of the network resource. For example, the user device 150 may check against a specific threshold in terms of the measured RSRP. Alternatively, or in addition, the validity of the timing alignment information may be determined based on a comparison between a threshold difference and an estimated RTD related to the network resource. For example, the user device 150 may determine if the estimated RTD is within a certain value.

In some example embodiments, the user device 150 may retain the validity checking until a condition is met. The condition may include expiry of a timer, for example, a validity timer for the timing alignment information. Alternatively, or in addition, the condition may include expiry of at least one validity condition of the timing alignment information. Alternatively, or in addition, the condition may include switch to a target network resource. For example, switch or handover is completed. Alternatively, or in addition, the condition may include another network resource having been configured as a target network resource. It may mean that if the network resource is not considered as a candidate target network resource, validity checking of the network resource may be terminated.

Alternatively, or in addition, the condition may include reception of an indication of invalidity of the timing alignment information. In some example embodiments, the indication of the invalidity may include at least one of: an indication that the timing alignment information is invalid, or a timing alignment error of the network resource which is greater than a threshold error. For example, the greater timing alignment error is not feasible or applicable for the user device 150 to correctly estimate the TA.

Alternatively, or in addition, the condition may include reception of updated timing alignment information of the network resource. Alternatively, or in addition, the condition may include reception or applying of a RRC configuration indicating cease of the checking. Such indication may be explicit or implicit. For example, in some example embodiments, a new RRC reconfiguration may implicitly indicate the cease of the checking. Accordingly, if the user device 150 receives a new RRC reconfiguration, the user device 150 may automatically delete the previous configuration or values for the timing alignment information.

Alternatively, or in addition, the condition may include reception of an instruction to initiate random access towards the network resource or a source network resource of the source network device 501. Alternatively, or in addition, the condition may include reception of an indication that the network resource is out of synchronization.

In some example embodiments, if the user device 150 determines that the timing alignment information is invalid, the user device 150 may send (535) to the source network device 501 an indication of the invalidity of the timing alignment information. For example, in case of invalidity, the user device 150 may inform the network to either receive updated timing alignment information or be configured for RACH-based TA acquisition.

In some example embodiments, after sending the indication of the invalidity of the timing alignment information to the source network device 501, the user device 150 may initiate random access towards the network resource or obtain a timing advance of the target network device. For example, if the random access configuration is already received, then the user device 150 may use RA to handover to a target-cell or to acquire TA of the target node.

The source network device 501 receives the indication of the invalidity from the user device 150. In some example embodiments, in response to receiving the indication of the invalidity of the timing alignment information, the source network device 501 may send (545), to the user device 150, updated timing alignment information of the network resource.

In some example embodiments, the updated timing alignment information may be sent to the user device 150 in an MAC CE instead of an RRC message. As such, timely update of the timing alignment information can be achieved. Then, the user device 150 may update the timing alignment offset based on the updated timing alignment information and may perform the TA estimation based on the updated timing alignment offset that is determined based on the updated timing alignment information.

Alternatively, in some example embodiments, in response to receiving the indication of the invalidity of the timing alignment information, the source network device 501 may send, to the user device 150, an instruction to initiate random access towards the network resource. In other words, the source network device 501 may indicate the user device 150 to perform RACH based TA acquisition.

In some example embodiments, the source network device 501 may send, to the candidate target network device (for example, the second network device 502), timing alignment information of at least one further network resource. The at least one further network resource may include for example a network resource of the source network device 501. This may mean that after handover, the previous serving node may act as a potential candidate network device, for example, due to ping pong. In an example, once the UE switches to a new cell in the case of inter-CU LTM HO, the (previous) source-CU may share the acquired timing offset information with the new source-CU.

In some example embodiments, the source network device 501 may monitor (540) validity of the timing alignment information. In case of invalidity, the source network device 501 may send the updated timing alignment information to the user device 150. For example, the source-CU and/or the source DU may monitor the validity/variation of the provided synchronicity (timing alignment) status (e.g., by triggering a timer).

Alternatively, or in addition, the second network device 502 may monitor (555) validity of the timing alignment information. In case of invalidity, the second network device 502 may send the updated timing alignment information to the source network device 501. The source network device 501 may then forward the updated timing alignment information to the user device 150. In an example, the target-CU (in coordination with target-DU) may monitor the validity of the validity/variation of the provided timing alignment information and inform the source-CU if it is updated, not valid or exceed a certain threshold. The source-DU may then either provides the updated values to the UE. Alternatively, the source-DU may then configure/trigger the UE with RACH-based TA acquisition.

As mentioned above, in some example embodiments, the second network device 502 may include a location service device in a core network, for example an AMF. For example, the source network device 501 may include a source CU. The source CU may directly communicate with the AMF, providing information of source and potential target-cells and directly request for relative time difference (or timing alignment offset) information as discussed in solution 2.1. After receiving information, source-CU may then share the information with the source-DU, the UE, and (after HO) potentially with target-CU. The AMF may also share further information on the age, validity and accuracy of the provided information with the source-CU. Alternatively, the AMF informs the source-CU if the values exceed a certain threshold or not valid.

As will be described below with reference to FIG. 6, the AMF communicates with the location management function (LMF) to acquire the information pertaining to the relative time difference (or time alignment offset) of the respective cells. The LMF assesses whether its information is up-to-date, and potentially instigates a New Radio Positioning Protocol Annex (NRPPA) session to the respective cells to obtain this information, which is then provided to the AMF.

As mentioned above, in some example embodiments, the timing alignment information may be received from a location service device of a core network, for example, an AMF. Reference is FIG. 6 to illustrate such example embodiments.

FIG. 6 illustrates a further example signaling flow of TA acquisition according to some example embodiments of the present disclosure. The signaling flow 600 involves the user device 150, a source network device 601 and a location service device 602 in a core network. The signaling flow 600 may be considered as an example of the signaling flow 400, and the location service device 602 may be considered as an example of the network device 401. The source network device 601 may be a serving network device for the user device 150.

In some example embodiments, the user device 150 may send (605) to the source network device 601, a capability indication of the user device being capable of acquiring timing alignment information from the location service device 602. For example, the UE (with positioning capability) informs the network (for example, a source CU and/or a source DU) about its capability to directly acquire timing alignment offset through communication with the AMF. In other words, the UE utilizes its positioning capability and its ability to communicate bidirectionally with the AMF at the core network via Non Access Stratum (NAS) to collect information that can be used not only for positioning purposes, but also for UE-based TA estimation as well.

In some example embodiments, the source network device 601 may send (607) to the user device 150 a timing advance acquisition configuration. The timing advance acquisition configuration may include at least one of a list of network resources for which timing advance estimation is to be performed, or at least one condition to trigger the timing advance estimation for the network resources. For example, the network may provide the UE with a UE-based TA acquisition configuration, which may include list of cells for which the UE should acquire the TA and potential conditions under which the UE should initiate the UE-based TA estimation.

The user device 150 send (610), to the location service device 602, a request for timing alignment information of a network resource associated with a candidate target network device of a handover. Similarly, as above, the network resource associated with the candidate target network device may be referred to as candidate network resource.

In some example embodiments, the request for the timing alignment information may include a location service request indicating that the timing alignment information is requested. For example, the request may include a Mobile-Originated Location Request (MO-LR). The MO-LR may include an LTE Positioning Protocol (LPP) PDU to request (on-demand) positioning assistance data, with respect to the PRS transmissions pertaining to the source DU and target DU.

In some example embodiments, the request for the timing alignment information may indicate a list of network resources or a set of at least one pair of network resources for which timing alignment information is requested. In an example, to support subsequent LTM, a list of multiple target cells (for example, cells belonging to different CUs) may be provided as a set of network resource pairs. Each pair includes two network resources (for example, two cells, two TRPs, two beam groups or beam pairs) for which the timing alignment offset needs to be calculated with respect to each other. For example, a set of cell pairs may be provided as: (servingCell1, targetCell1), (servingCell1, targetCell2), (servingCell2, targetCell3). In another example, a list of cells may be provided, e.g., targetCell1, targetCell2, and targetCell3, for which the timing alignment information needs to be provided (with respect to one cell, e.g., ServingCell1, or a reference synchronization point, e.g., GNSS).

Upon receiving the request, the location service device 602 may obtain the timing alignment information as requested. By taking the AMF as an example, the MO-LR request reaches first the AMF via a Non-Access Stratum (NAS) layer, and then reaches the LMF as part of the LPP protocol, to request positioning assistance data containing time-synchronization information of the source/target cells. Depending on the level of up-to-date information at the LMF side, the LMF may instigate an NRPPA session with the respective cells to acquire up-to-date transmission timing information of the respective cells. The LMF responds to the MO-LR request and provides the requested information to the AMF.

The timing alignment information indicates timing alignment offset between the network resource and another network resource. The network resource and the other network resource may be a candidate target cell and a source cell of a handover, respectively. For example, a timing alignment offset between the network resource and a serving network resource of a source network device of the handover may be indicated. For another example, the timing alignment offset between the network resource and a synchronization reference (such as a GNSS) may be indicated.

In some example embodiments, the timing alignment information may indicate a timing alignment offset between the candidate network resource and a serving network resource. In some example embodiments, the AMF may send, to the UE, the supplementary information, for example, accuracy, validity, variation of the timing alignment offset over time. In an example, the AMF, with the assistance of LMF, may also provide the UE additional information about the accuracy, validity, or variation of the timing alignment offset over time. Alternatively, the AMF, later on, informs the UE if the values exceed a certain threshold.

After obtaining the requested timing alignment information, the location service device 602 send (615) the timing alignment information to the user device 150. In some example embodiments, the timing alignment information comprises positioning assistance data from the location service device, the positioning assistance data containing time synchronization information of the network resource. In some example embodiments, the timing alignment information may be included in a positioning calculation assistance message, for example, NR-PositionCalculationAssistance message.

In some example embodiments, the time synchronization information is carried in an information element of the positioning calculation assistance message, the information element indicating a relative time difference between the network resource and a serving network resource. For example, NR-PositionCalculationAssistance message may contain the relative time difference (called nr-RTD-Info) information element that provides the time synchronization information between the source DU/cell and the target DU/cell. From the nr-RTD-Info message, the user device 150 may calculate the timing alignment offset.

In some example embodiments, the user device 150 may inform the RAN of its acquisition of the timing alignment information. For example, as shown in FIG. 6, the user device 150 may send (620), to the source network device 601, an indication that the timing alignment information has been obtained.

In some example embodiments, the user device 150 may provide the timing alignment information to the RAN. For example, as shown in FIG. 6, the user device 150 may send (625) the timing alignment information to the source network device 601. In some example embodiments, the user device 150 may provide the timing alignment information to the RAN based on the timing alignment information indicating that a timing alignment error of the network resource is greater than a threshold error.

The user device 150 may determine (633) a timing alignment offset between the network resource and another network resource based on the timing alignment information. For example, a timing alignment offset between the network resource and a serving network resource of a source network device of the handover may be determined. For another example, the timing alignment offset between the network resource and a synchronization reference (such as a GNSS) may be determined. In some example embodiments, the user device 150 may perform (635) the TA estimation for the network resource at least partially based on the timing alignment offset. Then, the user device 150 may send (640), to the source network device 601, an indication whether the TA estimation is successful by using timing alignment information of the network resource. As such, the source network device 601 can be aware of the result of the TA acquisition.

In an example, the UE may inform the RAN about the successful/unsuccessful reception/calculation of the timing alignment offset. In the positioning framework, the RAN is transparent to interactions between the UE and the AMF, which are carried out via NAS signalling. Note that such indication from the UE to the RAN that the UE has obtained time alignment information from the core network thus is different from the current positioning framework.

In some example embodiments, the user device 150 may check (650) validity of the timing alignment information before performing the TA estimation. Based on determining that the timing alignment information is valid, the user device 150 may perform (635) the TA estimation based on the timing alignment offset that is determined based on the timing alignment information.

In some example embodiments, the location service device 602 may send (645) to the user device 150 information (which is also referred to as validity information) about at least one validity condition of the timing alignment information. In such example embodiments, checking of the validity of the timing alignment information may be at least partially based on the at least one validity condition. In an example, the AMF may share information on the validity or variation conditions of the provided timing alignment offset information. In such a scenario, the UE may be responsible for checking the validity, and if the provided timing alignment information is valid, then the UE may estimate the TA.

In some example embodiments, the validity of the timing alignment information may be determined based on a validity timer. For example, the user device 150 may run the validity timer. Alternatively, or in addition, the validity of the timing alignment information may be determined based on a comparison between a threshold strength and a measured signal strength of the network resource. For example, the user device 150 may check against a specific threshold in terms of the measured RSRP. Alternatively, or in addition, the validity of the timing alignment information may be determined based on a comparison between a threshold difference and an estimated RTD related to the network resource. For example, the user device 150 may determine if the estimated RTD is within a certain value.

In some example embodiments, the user device 150 may retain the validity checking until a condition is met. The condition may include expiry of a timer, for example, a validity timer for the timing alignment information. Alternatively, or in addition, the condition may include expiry of at least one validity condition of the timing alignment information. Alternatively, or in addition, the condition may include switch to a target network resource. For example, switch or handover is completed. Alternatively, or in addition, the condition may include another network resource having been configured as a target network resource. It may mean that if the network resource is not considered as a candidate target network resource, validity checking of the network resource may be terminated.

Alternatively, or in addition, the condition may include reception of an indication of invalidity of the timing alignment information. In some example embodiments, the indication of the invalidity may include at least one of: an indication that the timing alignment information is invalid, or a timing alignment error of the network resource which is greater than a threshold error. For example, the greater timing alignment error is not feasible or applicable for the user device 150 to correctly estimate the TA.

Alternatively, or in addition, the condition may include reception of updated timing alignment information of the network resource. Alternatively, or in addition, the condition may include reception or applying of a RRC configuration indicating cease of the checking. Such indication may be explicit or implicit. For example, in some example embodiments, a new RRC reconfiguration may implicitly indicate the cease of the checking. Accordingly, if the user device 150 receives a new RRC reconfiguration, the user device 150 may automatically delete the previous configuration or values for the timing alignment information.

Alternatively, or in addition, the condition may include reception of an instruction to initiate random access towards the network resource or a source network resource of the source network device 501. Alternatively, or in addition, the condition may include reception of an indication that the network resource is out of synchronization.

In some example embodiments, if the user device 150 determines that the timing alignment information is invalid, the user device 150 may send (655) to the location service device 602 an indication of the invalidity of the timing alignment information. For example, in case of invalidity, the user device 150 may inform the AMF to either receive updated timing alignment information or be configured for RACH-based TA acquisition.

In some example embodiments, after sending the indication of the invalidity of the timing alignment information to the location service device 602, the user device 150 may initiate random access towards the network resource or obtain a timing advance of the target network device. For example, if the random access configuration is already received, then the user device 150 may use RA to handover to a target-cell or to acquire TA of the target node. Some example embodiments are described above. In some example embodiments described above, the timing alignment information is from the core network, for example, the AMF. In these example embodiments, the AMF is the interface to the RAN and the UE, hence it is the node interacting with the RAN and the UE on requesting/providing timing alignment information which is typically stored and/or collected at the LMF. Moreover, the AMF and LMF may also provide the UE or CU with additional information on the validity/variation of the provided timing offset information, which are then checked before the estimation of TA.

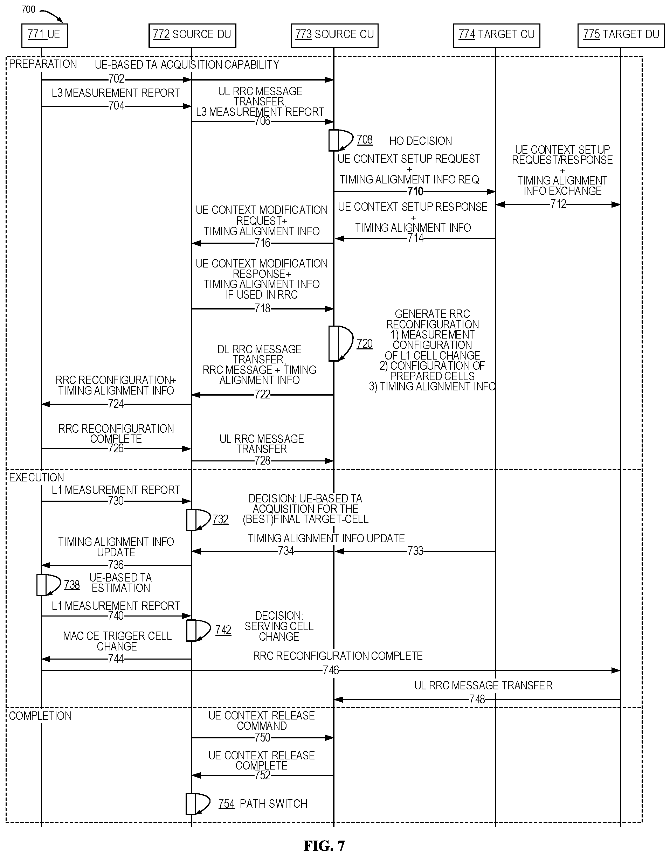

Now some more example embodiments are described with reference to FIG. 7 to FIG. 9.

As described above, in some example embodiments, the target CU and source CU may coordinate for timing alignment information exchange. Reference is now made to FIG. 7 to illustrate such an example. FIG. 7 illustrates an example signaling flow 700 of inter-CU coordination for timing alignment information exchange according to some example embodiments of the present disclosure. The signaling flow 700 may be considered as an example of the signaling flow 400, and an example of the signaling flow 500. Although one target CU and target DU are illustrated, this is merely an example without any limitation. More than one target CU and more than one target DU may be involved.

The UE 771 provides (702) its capability of calculating TA based on the RTD to the source DU 772, which then forwards it to the source CU 773. This capability indication or information may indicate the maximum number of supported TA estimation, and update, the method to estimate the TA, etc.

The UE 771 provides (704) the L3 measurement reports to the source DU 772, which are forwarded (706) to the source CU 773. Based on these measurement reports, the source CU 773 makes (708) a HO decision.

The source CU 773 then sends (710) a UE context setup request to the target CU 774. As part of the UE context setup request, the source CU communicates with the target CU 774 and informs it about the UE capability of RACH-less TA estimation based on RTD. The communicated information may include one or more lists of potential cells (or cell pairs) for which the information on timing alignment offset is required.

Alternatively, or in addition, the communicated information may indicate requested timing alignment information or in other words synchronicity information, for example, for each cell pair. The timing alignment information indicates timing alignment offset between the network resource and another network resource. In an example, it may be requested on whether cell pairs are synchronized with each other (for example, within a certain threshold). In another example, it may be requested on whether cells (associated with the target CU 774) are synchronized with a sync reference point (within a certain threshold). In a further example, un-synchronicity values of requested cell pairs may be desirable. In yet a further example, un-synchronicity values of cells associated with the target CU 774 with a synchronization reference point (within a certain threshold) may be requested.

Alternatively, or in addition, the communicated information may information on how synchronicity status varies over time or updated.

In some example embodiments, if needed, the target CU 774 may share (712) the received synchronization information from the source-CU 773 the target-DU 775 and coordinate with the target-DU 775 to prepare the requested synchronicity information.

The target-CU 774 sends (714) the requested timing alignment information to the source-CU 773. For example, the requested timing alignment information may be included in a UE context setup response to the source CU 773. In general, the source CU 773 may receive timing alignment information from multiple CUs.

In some example embodiments, if needed, the source-CU 773 may collect or coordinate synchronicity information from the source-DU 772 to calculate timing alignment offset between cells. For example, as shown in FIG. 7, the source CU 773 may send (716) to the source DU 772 a UE context modification request including the timing alignment information. Accordingly, the source DU 772 may send (718) a UE context modification response to the source CU 773, as shown in FIG. 7. It is to be understood that this coordination may also be performed earlier.

The source-CU 773 may process the received synchronicity information and prepare timing alignment information to be used by the source DU 772 and/or the UE 771. For example, as shown in FIG. 7, the source CU 773 may generate (720) an RRC reconfiguration including the timing alignment information. In some example embodiments, the source-CU 773 (or the source DU 772) may initiate/ configure a timer to monitor the validity of the timing alignment information.

Then, the timing alignment information is shared to the source DU 772 and the UE 771. For example, the source CU 773 may send (722) to the source DU 772 an RRC message including the timing alignment information. The source DU 772 may then forward (724) the timing alignment information to the UE 771 in an RRC reconfiguration message.

In some example embodiments, depending on the configuration, information regarding the validity of the provided timing alignment information may be provided to the UE 771. In this case, the UE 771 is responsible to check the validity of the provided timing alignment information (e.g., by running a timer) every time it wants to estimate the TA.

Depending on the configuration, the UE may keep and monitor the validity of provided timing alignment information until the timer expiry or expiry of the validity conditions, or until handover to a new cell, or until the cell is configured as a potential target-cell (e.g., the cell still available on subsequent LTM), or until receiving or applying a new RRC-reconfiguration or indication from the network about the invalidity of already provided timing alignment information, or new timing alignment information, or until receiving implicit information indicating the invalidity of the timing alignment information (for example, until receiving TA command which is more than a certain threshold).

The UE 771 may respond (726) with an RRC Reconfiguration Complete message to the source DU 772, which responds (728) to the source CU 773 with the UL RRC message transfer message. Cell preparation is completed.

During handover execution phase, the UE 771 may provide (730) the L1 measurement report to the source DU 772. Based on the received L1 measurement report, the source DU 772 may make (732) a decision on UE-based TA acquisition for (best) final target cell.

In an example, the target-CU 774 (in coordination with the target-DU 775) may monitor and provide (733) updated timing alignment information to the source-CU 773 which is then forwarded (734) to the source DU 772. Once timing alignment information is updated or become invalid, the source DU 772 then may send (736) a MAC-CE with the updated value to the UE 771 (instead of RRC-reconfiguration). Alternatively, the source DU 772 may trigger the UE 771 with the RACH-based TA acquisition if the timing alignment information are not valid or not accurate enough.

Continuing with FIG. 7, the UE 771 may perform (738) UE-based TA estimation based on the timing alignment information or the updated timing alignment information. For example, the UE 771 may determine the timing alignment offset based on the timing alignment information or the updated timing alignment information. The TA estimation may be performed based on the determined timing alignment offset. The UE 771 may send (740) L1 measurement reports to the source DU 772. Once the source DU decides (742) that the UE 771 should be handed over to a cell (i.e., target cell) of another DU (i.e., the target DU 775), the source DU 772 may send (744) a cell switch command (e.g., a MAC CE) to the UE 771 to trigger the cell switch.

Then the UE 771 applies the RRC configuration for the target cell of the target DU 775 as indicated by the cell switch command (via MAC CE) and switches to the target DU 775. To initiate the communication with the target DU 775, the UE 771 transmits (746) an RRC Reconfiguration Complete message to the target DU 775, which is forwarded (748) to the source CU 773 by an UL RRC message transfer message.

To release the UE context of the UE 771 from the source DU 772, the source CU 773 sends (750) to the source DU 772 a UE Context Release Request and receives (752) from the source DU 772 a UE context Release Response. The source CU 773 then performs (754) path switch.

As described above, in some example embodiments, the timing alignment information may be acquired from a function in the core network, for example, the AMF. In these example embodiments, relative time difference information available at the AMF (which is primary used for positioning purposes) may be used for TA estimation.

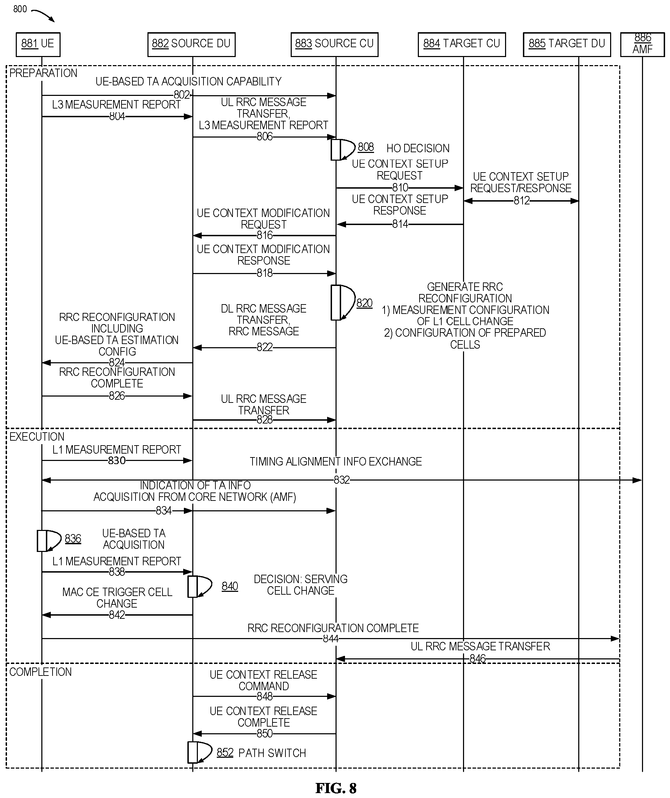

Further, in some example embodiments, the UE may acquire the timing alignment information directly from the AMF. Reference is now made to FIG. 8 to illustrate such an example. FIG. 8 illustrates an example signaling flow of timing alignment information acquisition from a core network according to some example embodiments of the present disclosure. The signaling flow 800 may be considered as an example of the signaling flow 400, and an example of the signaling flow 600. Although one target CU and target DU are illustrated, this is merely an example without any limitation. More than one target CU and more than one target DU may be involved.

The UE 881 provides (802) its capability of calculating TA based on the RTD to the source DU 882, which then forwards it to the source CU 883. The UE 881 also indicates the network about its capability to request or receive timing alignment offset information from the AMF 886.

The UE 881 provides (804) the L3 measurement reports to the source DU 882, which are forwarded (806) to the source CU 883. Based on these measurement reports, the source CU 883 makes (808) a HO decision for the UE 881.

The source CU 883 then sends (810) a UE context setup request for the UE 881 to the target CU 884. Then, the target CU 884 and the target DU 885 may exchange (812) a UE context setup request for the UE 881 and a UE context setup response. Then, the target CU 884 sends (814) a UE context setup response to the source CU 883.

The source-CU 883 may send (816) to the source DU 882 a UE context modification request for the UE 881. Accordingly, the source DU 882 may send (818) a UE context modification response to the source CU 883, as shown in FIG. 8.

The source-CU 883 may generate (820) an RRC reconfiguration including the measurement configuration of L1 cell change and configuration of prepared cells. The source CU 883 may send (822) to the source DU 882 an RRC message including the RRC reconfiguration.

The source DU 882 provides the UE 881 with a UE-based TA acquisition configuration, for example, including a list of cells for which the UE 881 should acquire the TA and potential conditions under which the UE 881 should initiate the UE-based TA estimation. For example, the source DU 882 may send (824) to the UE 881 an RRC reconfiguration message including or indicating the UE-based TA acquisition configuration.

The UE 881 may respond (826) with an RRC Reconfiguration Complete message to the source DU 882, which responds (828) to the source CU 883 with the UL RRC message transfer message. Cell preparation is completed.

During handover execution phase, the UE 881 may provide (830) the L1 measurement report to the source DU 882. If some of HO conditions are satisfied (for example, a measured target-cell above a certain threshold, or by receiving direct/indirect indication from the network), the UE 881 communicates (832) with the AMF 886 to provide a list of cells/TRP/Beams for each the UE 881 requests timing alignment information. The timing alignment information indicates timing alignment offset between the network resource and another network resource. As a response, the AMF 886 may provide the requested timing alignment information to the UE 881.

In some example embodiments, the exchange of the timing alignment information between the UE 881 and the AMF 886 may be carried out by means of the LPP protocol. For example, the message *NR-On-Demand-DL-PRS-Request* may be instigated by the UE 881 to the AMF 886 as part of an MO-LR location service request, to indicate to the AMF 886 of the request for timing alignment information for the designated cells. The message *NR-PositionCalculationAssistance* may be instigated by the AMF 886 to the UE 881, after obtained the information from the LMF, to provide the UE 881 with the timing alignment information about the designated cells/TRPs.

In an example, the AMF 886 (in coordination with the target-CU 884 and/or the target DU 885) may monitor and provide updated timing alignment information to the UE 881.

In some example embodiments, the UE 881 may implicitly or explicitly indicate (834) to the RAN network (for example, to the source CU 883, the source DU 882) about successful acquisition of the timing alignment information, or of success UE-based TA estimation. In this way, the RAN can know the information exchange between UE and the core network (for example, the AMF), and thus the RAN is not transparent to the acquisition of the timing alignment information. In addition, the UE 881 may also share the received timing alignment information with the network. This may be configured if the timing alignment offset exceeds a certain threshold.

Continuing with FIG. 8, the UE 881 may perform (836) UE-based TA estimation based on the timing alignment information. For example, the UE 881 may determine the timing alignment offset based on the timing alignment information or the updated timing alignment information. The TA estimation may be performed based on the determined timing alignment offset. The UE 881 may send (838) L1 measurement reports to the source DU 882. Once the source DU 882 decides (840) that the UE 881 should be handed over to a cell (i.e., target cell) of another DU (i.e., the target DU 885), the source DU 882 may send (842) a cell switch command (e.g., a MAC CE) to the UE 881 to trigger the cell switch.

Then the UE 881 applies the RRC configuration for the target cell of the target DU 885 as indicated by the cell switch command (via MAC CE) and switches to the target DU 885. To initiate the communication with the target DU 885, the UE 881 transmits (844) an RRC Reconfiguration Complete message to the target DU 885, which is forwarded (846) to the source CU 883 by an UL RRC message transfer message.

To release the UE context of the UE 881 from the source DU 882, the source CU 883 sends (848) to the source DU 882 a UE Context Release Request for the UE 881 and receives (850) from the source DU 882 a UE context Release Response. The source CU 883 then performs (852) path switch.

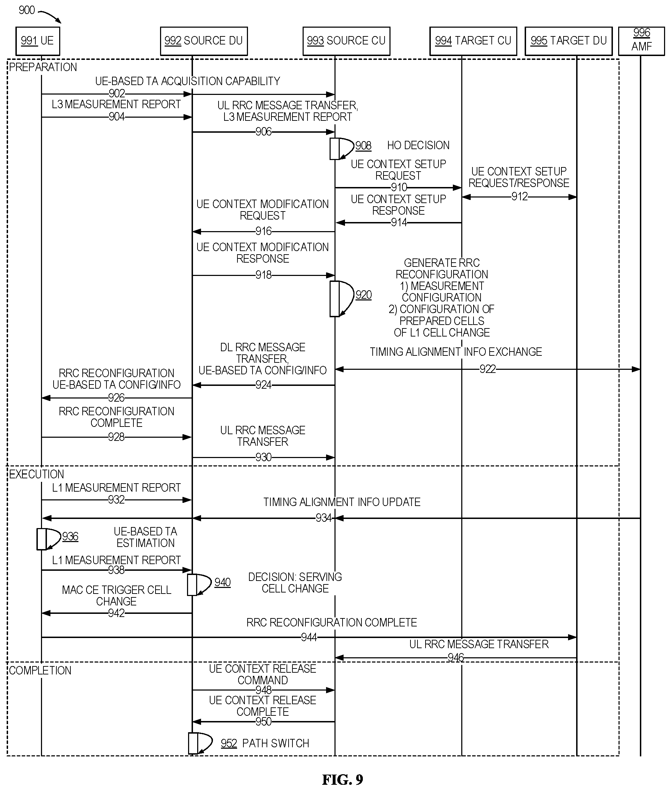

In some example embodiments, the UE may acquire the timing alignment information from the RAN, which in turn may acquire the timing alignment information from the core network such as from the AMF. Reference is now made to FIG. 9 to illustrate such an example. FIG. 9 illustrates another example signaling flow of timing alignment information acquisition from a core network according to some example embodiments of the present disclosure. The signaling flow 900 may be considered as an example of the signaling flow 400, and an example of the signaling flow 500. Although one target CU and target DU are illustrated, this is merely an example without any limitation. More than one target CU and more than one target DU may be involved.

The UE 991 provides (902) its capability of calculating TA based on the RTD to the source DU 992, which then forwards it to the source CU 993. The UE 991 provides (904) the L3 measurement reports to the source DU 992, which are forwarded (906) to the source CU 993. Based on these measurement reports, the source CU 993 makes (908) a HO decision for the UE 991.

The source CU 993 then sends (910) a UE context setup request for the UE 991 to the target CU 994. Then, the target CU 994 and the target DU 995 may exchange (912) a UE context setup request for the UE 991 and a UE context setup response. Then, the target CU 994 sends (914) a UE context setup response to the source CU 993.

The source CU 993 may send (916) to the source DU 992 a UE context modification request for the UE 991. Accordingly, the source DU 992 may send (918) a UE context modification response to the source CU 993, as shown in FIG. 9.

The source CU 993 may generate (920) an RRC reconfiguration including the measurement configuration of L1 cell change and configuration of prepared cells.

The source CU 993 may exchange (922) the timing alignment information with the AMF 996. The timing alignment information indicates timing alignment offset between the network resource and another network resource. For example, the source CU 993 may provide the list of target-cells to the AMF 996 and request the AMF 996 for the timing alignment information. The AMF 996 then provides the source CU 993 with the requested timing alignment information.

The source CU 993 may send (924) to the source DU 992 an RRC message including a UE-based TA acquisition configuration and the timing alignment information from the AMF 996. The source DU 992 provides the UE-based TA acquisition configuration and the timing alignment information to the UE 881. For example, the source DU 992 may send (926) to the UE 991 an RRC reconfiguration message including the UE-based TA acquisition configuration and the timing alignment information.

The UE 991 may respond (928) with an RRC Reconfiguration Complete message to the source DU 992, which responds (930) to the source CU 993 with the UL RRC message transfer message. Cell preparation is completed. During handover execution phase, the UE 991 may provide (932) the L1 measurement report to the source DU 992.

In an example, the AMF 996 (in coordination with the target CU 994 and/or the target DU 995) may monitor and provide (934) updated timing alignment information to the source-CU 993, which is then forwarded to the source DU 992 and the UE 991. In an example, the source DU 992 may send a MAC-CE with the updated value to the UE 991 (instead of the RRC-reconfiguration message). Alternatively, the source DU 992 may trigger the UE 991 with the RACH-based TA acquisition if the timing alignment information are not valid or not accurate enough.

Continuing with FIG. 9, the UE 991 may perform (936) UE-based TA estimation based on the timing alignment information. For example, the UE 771 may determine the timing alignment offset based on the timing alignment information or the updated timing alignment information. The TA estimation may be performed based on the determined timing alignment offset. The UE 991 may send (938) L1 measurement reports to the source DU 992. Once the source DU 992 decides (940) that the UE 991 should be handed over to a cell (i.e., target cell) of another DU (i.e., the target DU 995), the source DU 992 may send (942) a cell switch command (e.g., a MAC CE) to the UE 991 to trigger the cell switch.

Then the UE 991 applies the RRC configuration for the target cell of the target DU 995 as indicated by the cell switch command (via MAC CE) and switches to the target DU 995. To initiate the communication with the target DU 995, the UE 991 transmits (944) an RRC Reconfiguration Complete message to the target DU 995, which is forwarded (946) to the source CU 993 by an UL RRC message transfer message.

To release the UE context of the UE 991 from the source DU 992, the source CU 993 sends (948) to the source DU 992 a UE Context Release Request for the UE 991 and receives (950) from the source DU 992 a UE context Release Response. The source CU 993 then performs (952) path switch.

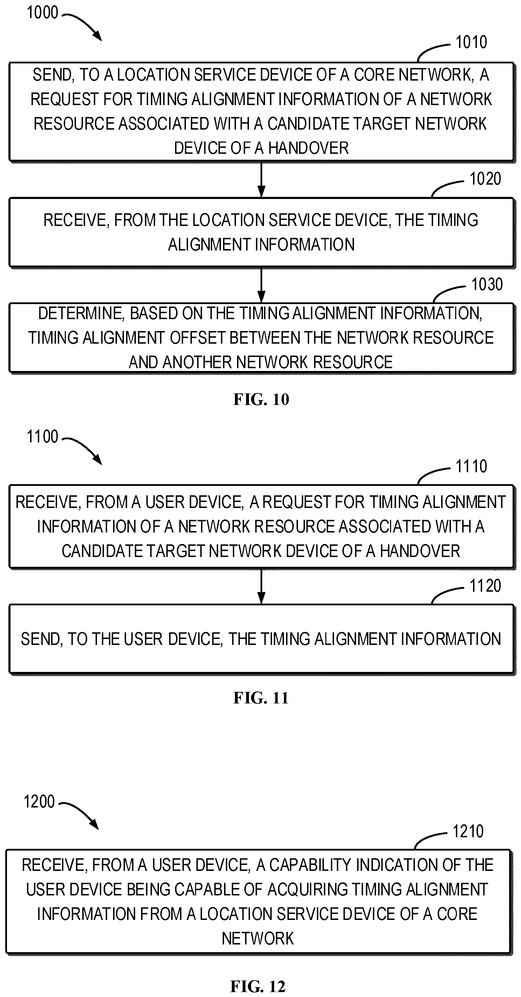

FIG. 10 shows a flowchart of an example method 1000 implemented at a user device in accordance with some example embodiments of the present disclosure. For the purpose of discussion, the method 1000 will be described from the perspective of the user device 150.

At block 1010, the user device 150 sends, to a location service device of a core network, a request for timing alignment information of a network resource associated with a candidate target network device of a handover.

At block 1020, the user device 150 receives, from the location service device, the timing alignment information.

At block 1030, the user device 150 determines, based on the timing alignment information, timing alignment offset between the network resource and another network resource.

In some example embodiments, the user device 150 may send, to a source network device, a capability indication of the user device being capable of acquiring timing alignment information from the location service device.

In some example embodiments, the user device 150 may send, to a source network device, an indication that the timing alignment information has been obtained.

In some example embodiments, the user device 150 may receive, from a source network device, a timing advance acquisition configuration including at least one of: a list of network resources for which timing advance estimation is to be performed; or at least one condition to trigger the timing advance estimation for the network resources.

In some example embodiments, the request for the timing alignment information comprises a location service request indicating that the timing alignment information is requested.

In some example embodiments, the request for the timing alignment information indicates a list of network resources or a set of at least one pair of network resources for which timing alignment information is requested.

In some example embodiments, the timing alignment information comprises positioning assistance data containing time synchronization information of the network resource.

In some example embodiments, the timing alignment information is included in a positioning calculation assistance message.

In some example embodiments, the time synchronization information of the network resource is carried in an information element of the positioning calculation assistance message, the information element indicating a relative time difference between the network resource and a serving network resource.

In some example embodiments, the user device 150 may send the timing alignment information to the source network device.

In some example embodiments, the timing alignment information is sent to the source network device, based on the timing alignment information indicating that a timing alignment error of the network resource is greater than a threshold error.

In some example embodiments, the user device 150 may perform the timing advance estimation for the network resource at least partially based on the timing alignment offset; and send, to the source network device, an indication whether the timing advance estimation is successful.

In some example embodiments, the user device 150 may check validity of the timing alignment information before performing the timing advance estimation, wherein the timing advance estimation is performed based on determining that the timing alignment information is valid.

In some example embodiments, the checking of the validity of the timing alignment information is retained until at least one of: expiry of a timer, expiry of at least one validity condition of the timing alignment information, switch to a target network resource, another network resource having been configured as a target network resource, reception of an indication of invalidity of the timing alignment information, reception of updated timing alignment information of the network resource, reception or applying of a radio resource control configuration indicating cease of the checking, reception of an instruction to initiate random access towards the network resource or a source network resource of the source network device, or reception of an indication that the network resource is out of synchronization.

In some example embodiments, the indication of the invalidity of the timing alignment information comprises at least one of: an indication that the timing alignment information is invalid; or a timing alignment error of the network resource which is greater than a threshold error.

In some example embodiments, the validity of the timing alignment information is determined based on at least one of: a validity timer, a comparison between a threshold strength and a measured signal strength of the network resource, or a comparison between a threshold difference and an estimated receive time difference related to the network resource.

In some example embodiments, the user device 150 may receive, from the location service device, information about at least one validity condition of the timing alignment information, wherein the validity of the timing alignment information is checked based on the at least one validity condition.

In some example embodiments, the user device 150 may send, to the location service device, an indication of invalidity of the timing alignment information, based on determining that the timing alignment information is invalid.

In some example embodiments, the timing alignment information indicates a timing alignment offset between the network resource and a serving network resource.

In some example embodiments, the network resource and the another network resource may be a candidate target cell and a source cell of the handover, respectively.

FIG. 11 shows a flowchart of an example method 1100 implemented at a location service device of a core network in accordance with some example embodiments of the present disclosure. For the purpose of discussion, the method 1100 will be described from the perspective of the location service device 602.

At block 1110, the location service device 602 receives, from a user device, a request for timing alignment information of a network resource associated with a candidate target network device of a handover, where the timing alignment information indicates timing alignment offset between the network resource and another network resource.

At block 1120, the location service device 602 sends, to the user device, the timing alignment information.

In some example embodiments, the request for the timing alignment information comprises a location service request indicating that the timing alignment information is requested.

In some example embodiments, the request for the timing alignment information indicates a list of network resources or a set of at least one pair of network resources for which timing alignment information is requested.

In some example embodiments, the timing alignment information comprises positioning assistance data from the location service device, the positioning assistance data containing time synchronization information of the network resource.

In some example embodiments, the sent information is included in a positioning calculation assistance message.

In some example embodiments, the time synchronization information is carried in an information element of the positioning calculation assistance message, the information element indicating a relative time difference between the network resource and a serving network resource.

In some example embodiments, the network resource and the another network resource may be a candidate target cell and a source cell of the handover, respectively.

FIG. 12 shows a flowchart of an example method 1200 implemented at a source network device in accordance with some example embodiments of the present disclosure. For the purpose of discussion, the method 1200 will be described from the perspective of the source network device 601.

At block 1210, the source network device 601 receives, from a user device, a capability indication of the user device being capable of acquiring timing alignment information from a location service device of a core network, where the timing alignment information is applicable for estimating timing alignment offset between the network resource and another network resource.

In some example embodiments, the source network device 601 may receive, from the user device, an indication that timing alignment information of network resource associated with a target network device has been obtained.

In some example embodiments, the source network device 601 may send, to the user device, a timing advance acquisition configuration including at least one of: a list of network resources for which timing advance estimation is to be performed; or at least one condition to trigger the timing advance estimation for the network resources.

In some example embodiments, the source network device 601 may receive, from the user device, timing alignment information of network resource.

In some example embodiments, the received timing alignment information indicates that a timing alignment error of the network resource is greater than a threshold error.

In some example embodiments, the source network device 601 may receive, from the user device, an indication whether timing advance estimation for network resource is successful by using timing alignment information of the network resource.

In some example embodiments, a first apparatus capable of performing any of the method 1000 may comprise means for performing the respective operations of the method 1000 and/or any of the described one or more example embodiments thereof. The means may be implemented in any suitable form. For example, the means may be implemented in a circuitry or software module. The first apparatus may be implemented as or included in the user device 150.

In some example embodiments, the network resource and the another network resource may be a candidate target cell and a source cell of a handover, respectively.

In some example embodiments, a second apparatus capable of performing any of the method 1100 may comprise means for performing the respective operations of the method 1100 and/or any of the described one or more example embodiments thereof. The means may be implemented in any suitable form. For example, the means may be implemented in a circuitry or software module. The second apparatus may be implemented as or included in the location service device 602.

In some example embodiments, a third apparatus capable of performing any of the method 1200 may comprise means for performing the respective operations of the method 1200 and/or any of the described one or more example embodiments thereof. The means may be implemented in any suitable form. For example, the means may be implemented in a circuitry or software module. The third apparatus may be implemented as or included in the source network device 601.

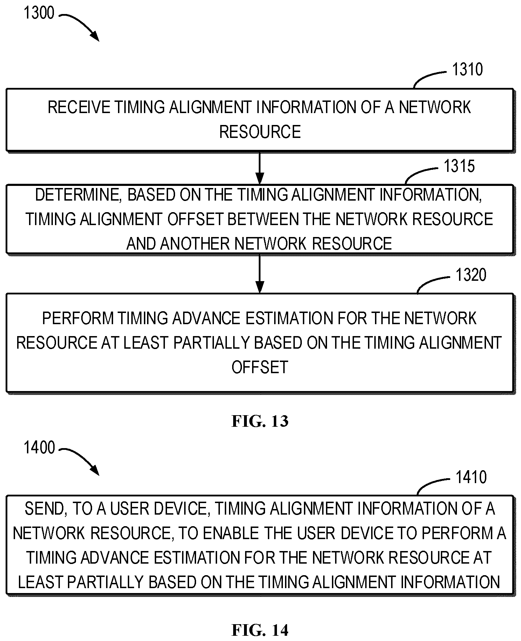

FIG. 13 shows a flowchart of an example method 1300 implemented at a user device in accordance with some example embodiments of the present disclosure. For the purpose of discussion, the method 1300 will be described from the perspective of the user device 150 in FIG. 1.

At block 1310, the user device 150 receives timing alignment information of a network resource.

At block 1315, the user device 150 determines, based on the timing alignment information, timing alignment offset between the network resource and another network resource.

At block 1320, the user device 150 performs timing advance estimation for the network resource at least partially based on the timing alignment offset.

In some example embodiments, the timing alignment information indicates at least one of: a timing alignment offset between the network resource and a serving network resource of a source network device of a handover, or a timing alignment offset between the network resource and a synchronization reference.

In some example embodiments, the network resource comprises at least one of: a cell, a transmission and reception point, or a beam group.

In some example embodiments, the network resource is associated with a candidate target network device of a handover, and the timing alignment information is received from a source network device.

In some example embodiments, the timing alignment information is received from a location service device of a core network.

In some example embodiments, the user device 150 may receive information about at least one of accuracy, validity, variation or update of the timing alignment information.

In some example embodiments, the user device 150 may receive updated timing alignment information of the network resource.

In some example embodiments, the user device 150 may receive information about at least one validity condition of the timing alignment information; and check validity of the timing alignment information based on the at least one validity condition.

In some example embodiments, the user device 150 may send, to a network device, a capability indication of the user device being capable of performing timing advance estimation based on a receive time difference.

In some example embodiments, the network resource and the another network resource may be a candidate target cell and a source cell of a handover, respectively.

FIG. 14 shows a flowchart of an example method 1400 implemented at a network device in accordance with some example embodiments of the present disclosure. For the purpose of discussion, the method 1400 will be described from the perspective of the network device 401.

At block 1410, the network device 401 sends, to a user device, timing alignment information of a network resource, to enable the user device to perform a timing advance estimation for the network resource at least partially based on the timing alignment information, wherein the timing alignment information indicates timing alignment offset between the network resource and another network resource.

In some example embodiments, the network device 401 may monitor validity of the timing alignment information; and based on determining that the timing alignment information is invalid, send, to the user device, updated timing alignment information of the network resource.

In some example embodiments, the validity of the timing alignment information is monitored based on a timer.

In some example embodiments, the network device 401 may send, to the user device, information about at least one validity condition of the timing alignment information.

In some example embodiments, the network resource is associated with a candidate target network device of a handover, and the network device comprises a source network device.

In some example embodiments, the network device 401 may receive, from the user device, a capability indication of the user device being capable of performing timing advance estimation based on a receive time difference.

In some example embodiments, the network device comprises a location service device of a core network.

In some example embodiments, the network resource and the another network resource may be a candidate target cell and a source cell of a handover, respectively.

In some example embodiments, a first apparatus capable of performing any of the method 1300 may comprise means for performing the respective operations of the method 1300 and/or any of the described one or more example embodiments thereof. The means may be implemented in any suitable form. For example, the means may be implemented in a circuitry or software module. The first apparatus may be implemented as or included in the user device 150.

In some example embodiments, a second apparatus capable of performing any of the method 1400 may comprise means for performing the respective operations of the method 1400 and/or any of the described one or more example embodiments thereof. The means may be implemented in any suitable form. For example, the means may be implemented in a circuitry or software module. The second apparatus may be implemented as or included in the network device 401.

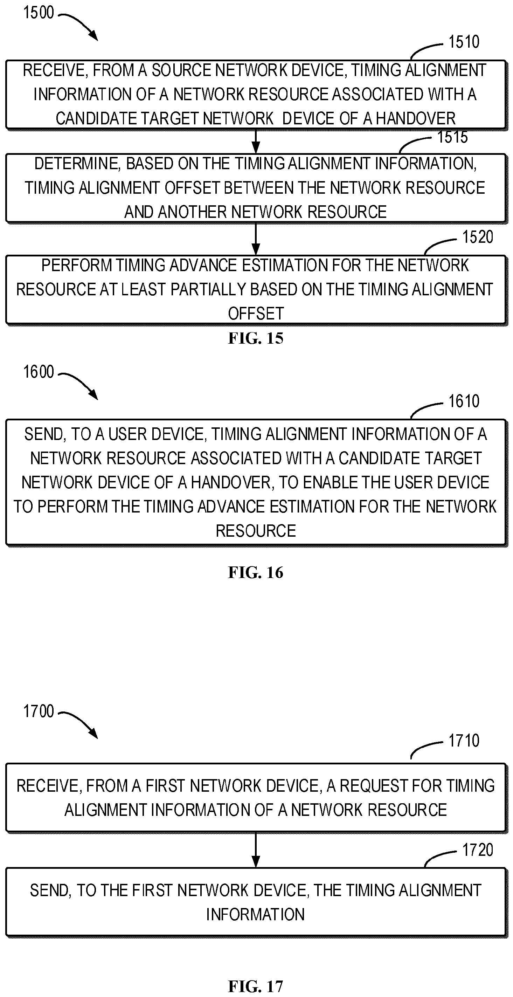

FIG. 15 shows a flowchart of an example method 1500 implemented at a user device in accordance with some example embodiments of the present disclosure. For the purpose of discussion, the method 1500 will be described from the perspective of the user device 150.

At block 1510, the user device 150 receives, from a source network device, timing alignment information of a network resource associated with a candidate target network device of a handover.

At block 1515, the user device 150 determines, based on the timing alignment information, timing alignment offset between the network resource and another network resource.

At block 1520, the user device 150 performs timing advance estimation for the network resource at least partially based on the timing alignment offset.

In some example embodiments, the user device 150 may send, to the source network device, a capability indication of the user device being capable of performing timing advance estimation based on a receive time difference.

In some example embodiments, the user device 150 may check validity of the timing alignment information before performing the timing advance estimation, wherein the timing advance estimation is performed based on determining that the timing alignment information is valid.

In some example embodiments, the checking of the validity of the timing alignment information is retained until at least one of: expiry of a timer, expiry of at least one validity condition of the timing alignment information, switch to a target network resource, another network resource having been configured as a target network resource, reception of an indication of invalidity of the timing alignment information, reception of updated timing alignment information of the network resource, reception of a radio resource control configuration indicating cease of the checking, reception of an instruction to initiate random access towards the network resource or a source network resource of the source network device, or reception of an indication that the network resource is out of synchronization.

In some example embodiments, the indication of the invalidity of the timing alignment information comprises at least one of: an indication that the timing alignment information is invalid; or a timing alignment error of the network resource which is greater than a threshold error.

In some example embodiments, the validity of the timing alignment information is determined based on at least one of: a validity timer, a comparison between a threshold strength and a measured signal strength of the network resource, or a comparison between a threshold difference and an estimated receive time difference related to the network resource.

In some example embodiments, the user device 150 may receive, from the source network device, information about at least one validity condition of the timing alignment information, wherein the validity of the timing alignment information is checked based on the at least one validity condition.

In some example embodiments, the user device 150 may send, to the source network device, an indication of invalidity of the timing alignment information, based on determining that the timing alignment information is invalid.

In some example embodiments, the user device 150 may after sending the indication of the invalidity of the timing alignment information to the source network device, receive, from the source network device, updated timing alignment information of the network resource.

In some example embodiments, the updated timing alignment information is received from the source network device in an MAC CE.

In some example embodiments, the user device 150 may after sending the indication of the invalidity of the timing alignment information to the source network device, initiate random access towards the network resource or obtain a timing advance of the target network device.

In some example embodiments, the timing alignment information indicates a timing alignment offset between a network resource of the source network device and the network resource associated with the target network device.

In some example embodiments, the network resource and the another network resource may be a candidate target cell and a source cell of the handover, respectively.

FIG. 16 shows a flowchart of an example method 1600 implemented at a source network device in accordance with some example embodiments of the present disclosure. For the purpose of discussion, the method 1600 will be described from the perspective of the source network device 501.

At block 1610, the source network device 501 sends, to a user device, timing alignment information of a network resource associated with a candidate target network device of a handover, to enable the user device to perform the timing advance estimation for the network resource, where the timing alignment information indicates timing alignment offset between the network resource and another network resource.

In some example embodiments, the source network device 501 may receive, from the user device, a capability indication of the user device being capable of performing timing advance estimation based on a receive time difference.

In some example embodiments, the source network device 501 may receive, from the user device, an indication of invalidity of the timing alignment information.

In some example embodiments, the source network device 501 may in response to receiving the indication of the invalidity of the timing alignment information, send, to the user device, updated timing alignment information of the network resource.

In some example embodiments, the updated timing alignment information is sent to the user device in an MAC CE.

In some example embodiments, the source network device 501 may in response to receiving the indication of the invalidity of the timing alignment information, send, to the user device, an instruction to initiate random access towards the network resource.

In some example embodiments, the source network device 501 may send, to the user device, information about at least one validity condition of the timing alignment information.

In some example embodiments, the source network device 501 may send, to a second network device, a request for the timing alignment information; and obtain, from the second network device, the timing alignment information as a response to the request for the timing alignment information.

In some example embodiments, the second network device comprises the target network device.

In some example embodiments, the request for the timing alignment information comprises at least one of: a request on whether a pair of network resources are synchronized with each other, the pair of network resources including the network resource; a request on whether the network resource is synchronized with a synchronization reference; a request for an un-synchronicity value between the pair of network resources; a request for an un-synchronicity value of the network resource with the synchronization reference; or a request for at least one of accuracy, validity, variation or update of the timing alignment information.

In some example embodiments, the request for the at least one of accuracy, validity, variation or update of the timing alignment information comprises at least one of: a request for a notification that a timing alignment error of the network resource is greater than a threshold error; or a request for a periodic notification of the timing alignment information.

In some example embodiments, the request for the timing alignment information includes a list of potential network resources for which timing alignment information is requested.

In some example embodiments, the source network device 501 may send, to the second network device, information about synchronicity status of a serving network resource, to assist the second network device in evaluation of the timing alignment information of the network resource.

In some example embodiments, the source network device 501 may send, to the second network device, the capability indication of the user device.

In some example embodiments, the capability indication of the user device is sent to the second network device in a context setup request for the user device.

In some example embodiments, the second network device comprises a location service device of a core network.

In some example embodiments, the source network device 501 comprises a source central unit, and the instructions, when executed by the at least one processor, further cause the source network device to: receive, from a source distributed unit, timing alignment information of a plurality of network resources; and determine the timing alignment information of the network resource from the received timing alignment information of the plurality of network resources.

In some example embodiments, the source network device 501 may send, to the target network device, timing alignment information of at least one further network resource.

In some example embodiments, the network resource and the another network resource may be a candidate target cell and a source cell of the handover, respectively.

FIG. 17 shows a flowchart of an example method 1700 implemented at a second network device in accordance with some example embodiments of the present disclosure. For the purpose of discussion, the method 1700 will be described from the perspective of the second network device 502.

At block 1710, the second network device 502 receives, from a first network device, a request for timing alignment information of a network resource.

At block 1720, the second network device 502 sends, to the first network device, the timing alignment information, where the timing alignment information indicates timing alignment offset between the network resource and another network resource.

In some example embodiments, the second network device 502 comprises a candidate target network device of a handover, and the first network device comprises a source network device.

In some example embodiments, the target network device comprises a target central unit, and the second network device 502 may determine the timing alignment information by coordination with a target distributed unit.

In some example embodiments, the request for the timing alignment information comprises at least one of: a request on whether a pair of network resources are synchronized with each other, the pair of network resources including the network resource; a request on whether the network resource is synchronized with a synchronization reference; a request for an un-synchronicity value between the pair of network resources; a request for an un-synchronicity value of the network resource with respect to the synchronization reference; or a request for at least one of accuracy, validity, variation or update of the timing alignment information.

In some example embodiments, the request for the at least one of accuracy, validity, variation or update of the timing alignment information comprises at least one of: a request for a notification that a timing alignment error of the network resource is greater a threshold error; or a request for a periodic notification of the timing alignment information.

In some example embodiments, the request for the timing alignment information includes a list of potential network resources for which timing alignment information is requested.

In some example embodiments, the second network device 502 may receive, from the first network device, information about synchronicity status of a serving network resource, to assist the target network device in evaluation of the timing alignment information of the network resource.

In some example embodiments, the second network device 502 may receive, from the first network device, first capability indication of the user device to perform timing advance estimation based on a receive time difference.

In some example embodiments, the first capability indication of the user device is received from the first network device in a context setup request for the user device.

In some example embodiments, the second network device 502 may receive, from the first network device, timing alignment information of at least one further network resource.

In some example embodiments, the second network device comprises a location service device of a core network.

In some example embodiments, the second network device 502 may monitor validity of the timing alignment information; and based on determining that the timing alignment information is invalid, send, to the first network device, updated time alignment information of the network resource.

In some example embodiments, the network resource and the another network resource may be a candidate target cell and a source cell of a handover, respectively.

In some example embodiments, a first apparatus capable of performing any of the method 1500 may comprise means for performing the respective operations of the method 1500 and/or any of the described one or more example embodiments thereof. The means may be implemented in any suitable form. For example, the means may be implemented in a circuitry or software module. The first apparatus may be implemented as or included in the user device 150.

In some example embodiments, a second apparatus capable of performing any of the method 1600 may comprise means for performing the respective operations of the method 1600 and/or any of the described one or more example embodiments thereof. The means may be implemented in any suitable form. For example, the means may be implemented in a circuitry or software module. The second apparatus may be implemented as or included in the source network device 501.

In some example embodiments, a third apparatus capable of performing any of the method 1700 may comprise means for performing the respective operations of the method 1700 and/or any of the described one or more example embodiments thereof. The means may be implemented in any suitable form. For example, the means may be implemented in a circuitry or software module. The third apparatus may be implemented as or included in the second network device 502.

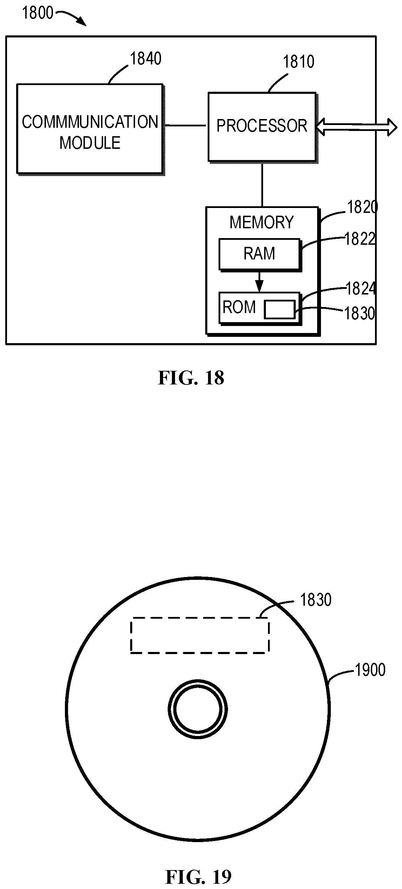

FIG. 18 is a simplified block diagram of a device 1800 that is suitable for implementing example embodiments of the present disclosure. The device 1800 may be provided to implement a communication device. As shown, the device 1800 includes one or more processors 1810, one or more memories 1820 coupled to the processor 1810, and one or more communication modules 1840 coupled to the processor 1810.

The communication module 1840 is for bidirectional communications. The communication module 1840 has one or more communication interfaces to facilitate communication with one or more other modules or devices. The communication interfaces may represent any interface that is necessary for communication with other network elements. In some example embodiments, the communication module 1840 may include at least one antenna.

The processor 1810 may be of any type suitable to the local technical network and may include one or more of the following: general purpose computers, special purpose computers, microprocessors, digital signal processors (DSPs) and processors based on multicore processor architecture, as non-limiting examples. The device 1800 may have multiple processors, such as an application specific integrated circuit chip that is slaved in time to a clock which synchronizes the main processor.

The memory 1820 may include one or more non-volatile memories and one or more volatile memories. Examples of the non-volatile memories include, but are not limited to, a Read Only Memory (ROM) 1824, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random-access memory (RAM) 1822 and other volatile memories that will not last in the power-down duration.

A computer program 1830 includes computer executable instructions that are executed by the associated processor 1810. The instructions of the program 1830 may include instructions for performing operations/acts of some example embodiments of the present disclosure. The program 1830 may be stored in the memory, e.g., the ROM 1824. The processor 1810 may perform any suitable actions and processing by loading the program 1830 into the RAM 1822.

The example embodiments of the present disclosure may be implemented by means of the program 1830 so that the device 1800 may perform any process of the disclosure as discussed with reference to FIG. 4 to FIG. 17. The example embodiments of the present disclosure may also be implemented by hardware or by a combination of software and hardware.

In some example embodiments, the program 1830 may be tangibly contained in a computer readable medium which may be included in the device 1800 (such as in the memory 1820) or other storage devices that are accessible by the device 1800. The device 1800 may load the program 1830 from the computer readable medium to the RAM 1822 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

FIG. 19 shows an example of the computer readable medium 1900 which may be in form of CD, DVD or other optical storage disk. The computer readable medium 1900 has the program 1830 stored thereon.

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general-purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1. A user device comprising:

   at least one processor; and
   at least one memory storing instructions that, when executed by the at least one processor, cause the user device at least to:

   send, to a location service device of a core network, a request for timing alignment information of a network resource associated with a candidate target network device of a handover;
   receive, from the location service device, the timing alignment information; and
   determine, based on the timing alignment information, timing alignment offset between the network resource and another network resource.

2. The user device of claim 1, wherein the instructions, when executed by the at least one processor, further cause the user device to:
   send, to a source network device, a capability indication of the user device being capable of acquiring timing alignment information from the location service device.

3. The user device of claim 1 or 2, wherein the instructions, when executed by the at least one processor, further cause the user device to:
   send, to a source network device, an indication that the timing alignment information has been obtained.

4. The user device of any of claims 1 to 3, wherein the request for the timing alignment information comprises a location service request indicating that the timing alignment information is requested.

5. The user device of any of claims 1 to 4, wherein the request for the timing alignment information indicates a list of network resources or a set of at least one pair of network resources for which timing alignment information is requested.

6. The user device of any of claims 1 to 5, wherein the timing alignment information comprises positioning assistance data containing time synchronization information of the network resource.

7. The user device of any of claims 1 to 6, wherein the instructions, when executed by the at least one processor, further cause the user device to:

   perform the timing advance estimation for the network resource at least partially based on the timing alignment offset; and
   send, to the source network device, an indication whether the timing advance estimation is successful.

8. The user device of claim 7, wherein the instructions, when executed by the at least one processor, further cause the user device to:

check validity of the timing alignment information before performing the timing advance estimation, wherein the timing advance estimation is performed based on determining that the timing alignment information is valid.

9. The user device of any of claims 1 to 8, wherein the network resource and the another network resource are a candidate target cell and a source cell of the handover, respectively.

10. A location service device of a core network, the location service device comprising:

at least one processor; and
at least one memory storing instructions that, when executed by the at least one processor, cause the location service device at least to:

receive, from a user device, a request for timing alignment information of a network resource associated with a candidate target network device of a handover; and
send, to the user device, the timing alignment information, wherein the timing alignment information indicates timing alignment offset between the network resource and another network resource.

11. The location service device of claim 10, wherein the request for the timing alignment information comprises a location service request indicating that the timing alignment information is requested.

12. The location service device of any of claims 10 to 11, wherein the timing alignment information comprises positioning assistance data from the location service device, the positioning assistance data containing time synchronization information of the network resource.

13. The location service device of claim 12, wherein the sent information is included in a positioning calculation assistance message.

14. The location service device of claim 13, wherein the time synchronization information is carried in an information element of the positioning calculation assistance message, the information element indicating a relative time difference between the network resource and a serving network resource.

15. A source network device comprising:

at least one processor; and
at least one memory storing instructions that, when executed by the at least one processor, cause the source network device at least to:
receive, from a user device, a capability indication of the user device being capable of acquiring timing alignment information from a location service device of a core network, wherein the timing alignment information is applicable for estimating timing alignment offset between the network resource and another network resource.

**FIG. 1**

**FIG. 2**

**FIG. 3**

EP 4 723 730 A1

400

150                                                        401

┌──────────────┐                              ┌──────────────────┐
│ USER DEVICE  │                              │  NETWORK DEVICE  │
└──────────────┘                              └──────────────────┘

CAPABILITY INDICATION
- - - - - - - - - - - -405- - - - - - - - - - - -▶

TIMING ALIGNMENT INFORMATION
◀─────────────────410─────────────────

VALIDITY INFORMATION
◀- - - - - - - - - -415- - - - - - - - - -

420    CHECK VALIDITY

MONITOR VALIDITY    425

UPDATED TIMING ALIGNMENT INFORMATION
◀- - - - - - - - - -430- - - - - - - - - -

433    DETERMINE TIMING
       ALIGNMENT OFFSET

435    PERFORM TA ESTIMATION

**FIG. 4**

**FIG. 5**

600

150

USER DEVICE

601

SOURCE NETWORK
DEVICE

602

LOCATION SERVICE
DEVICE

CAPABILITY INDICATION
-----605-----

TA ACQUISITION CONFIGURATION
-----607-----

REQUEST FOR TIMING ALIGNMENT INFORMATION
-----610-----

TIMING ALIGNMENT INFORMATION
-----615-----

INDICATION THAT THE TIMING ALIGNMENT
INFORMATION HAS BEEN OBTAINED
-----620-----

TIMING ALIGNMENT INFORMATION
-----625-----

VALIDITY INFORMATION
-----645-----

650 CHECK VALIDITY

INDICATION OF INVALIDITY
-----655-----

633 DETERMINE TIMING
ALIGNMENT OFFSET

635 PERFORM TA ESTIMATION

INDICATION OF WHETHER THE TIMING
ADVANCE ESTIMATION IS SUCCESSFUL
-----640-----

**FIG. 6**

700

| 771 UE | 772 SOURCE DU | 773 SOURCE CU | 774 TARGET CU | 775 TARGET DU |

**PREPARATION**

UE-BASED TA ACQUISITION CAPABILITY
702

L3 MEASUREMENT REPORT
704

UL RRC MESSAGE TRANSFER, L3 MEASUREMENT REPORT
706

708   HO DECISION

UE CONTEXT SETUP REQUEST + TIMING ALIGNMENT INFO REQ
710

UE CONTEXT SETUP REQUEST/RESPONSE + TIMING ALIGNMENT INFO EXCHANGE
712

UE CONTEXT MODIFICATION REQUEST+ TIMING ALIGNMENT INFO
716

UE CONTEXT SETUP RESPONSE + TIMING ALIGNMENT INFO
714

UE CONTEXT MODIFICATION RESPONSE+ TIMING ALIGNMENT INFO IF USED IN RRC
718

720   GENERATE RRC RECONFIGURATION
1) MEASUREMENT CONFIGURATION OF L1 CELL CHANGE
2) CONFIGURATION OF PREPARED CELLS
3) TIMING ALIGNMENT INFO

RRC RECONFIGURATION+ TIMING ALIGNMENT INFO
724

DL RRC MESSAGE TRANSFER, RRC MESSAGE + TIMING ALIGNMENT INFO
722

RRC RECONFIGURATION COMPLETE
726

UL RRC MESSAGE TRANSFER
728

**EXECUTION**

L1 MEASUREMENT REPORT
730

732   DECISION: UE-BASED TA ACQUISITION FOR THE (BEST)FINAL TARGET-CELL

TIMING ALIGNMENT INFO UPDATE
736

TIMING ALIGNMENT INFO UPDATE
734

733

738   UE-BASED TA ESTIMATION

L1 MEASUREMENT REPORT
740

742   DECISION: SERVING CELL CHANGE

MAC CE TRIGGER CELL CHANGE
744

RRC RECONFIGURATION COMPLETE
746

UL RRC MESSAGE TRANSFER
748

**COMPLETION**

UE CONTEXT RELEASE COMMAND
750

UE CONTEXT RELEASE COMPLETE
752

754   PATH SWITCH

**FIG. 7**

36

**FIG. 8**

**FIG. 9**

1000

1010

SEND, TO A LOCATION SERVICE DEVICE OF A CORE NETWORK, A REQUEST FOR TIMING ALIGNMENT INFORMATION OF A NETWORK RESOURCE ASSOCIATED WITH A CANDIDATE TARGET NETWORK DEVICE OF A HANDOVER

1020

RECEIVE, FROM THE LOCATION SERVICE DEVICE, THE TIMING ALIGNMENT INFORMATION

1030

DETERMINE, BASED ON THE TIMING ALIGNMENT INFORMATION, TIMING ALIGNMENT OFFSET BETWEEN THE NETWORK RESOURCE AND ANOTHER NETWORK RESOURCE

**FIG. 10**

1100

1110

RECEIVE, FROM A USER DEVICE, A REQUEST FOR TIMING ALIGNMENT INFORMATION OF A NETWORK RESOURCE ASSOCIATED WITH A CANDIDATE TARGET NETWORK DEVICE OF A HANDOVER

1120

SEND, TO THE USER DEVICE, THE TIMING ALIGNMENT INFORMATION

**FIG. 11**

1200

1210

RECEIVE, FROM A USER DEVICE, A CAPABILITY INDICATION OF THE USER DEVICE BEING CAPABLE OF ACQUIRING TIMING ALIGNMENT INFORMATION FROM A LOCATION SERVICE DEVICE OF A CORE NETWORK

**FIG. 12**

1300 ⌐

1310

```
RECEIVE TIMING ALIGNMENT INFORMATION OF A NETWORK
RESOURCE
```

1315

```
DETERMINE, BASED ON THE TIMING ALIGNMENT INFORMATION,
TIMING ALIGNMENT OFFSET BETWEEN THE NETWORK RESOURCE
AND ANOTHER NETWORK RESOURCE
```

1320

```
PERFORM TIMING ADVANCE ESTIMATION FOR THE NETWORK
RESOURCE AT LEAST PARTIALLY BASED ON THE TIMING ALIGNMENT
OFFSET
```

**FIG. 13**

1400 ⌐

1410

```
SEND, TO A USER DEVICE, TIMING ALIGNMENT INFORMATION OF A
NETWORK RESOURCE, TO ENABLE THE USER DEVICE TO PERFORM A
TIMING ADVANCE ESTIMATION FOR THE NETWORK RESOURCE AT
LEAST PARTIALLY BASED ON THE TIMING ALIGNMENT INFORMATION
```

**FIG. 14**

1500

1510

RECEIVE, FROM A SOURCE NETWORK DEVICE, TIMING ALIGNMENT
INFORMATION OF A NETWORK RESOURCE ASSOCIATED WITH A
CANDIDATE TARGET NETWORK DEVICE OF A HANDOVER

1515

DETERMINE, BASED ON THE TIMING ALIGNMENT INFORMATION,
TIMING ALIGNMENT OFFSET BETWEEN THE NETWORK RESOURCE
AND ANOTHER NETWORK RESOURCE

1520

PERFORM TIMING ADVANCE ESTIMATION FOR THE NETWORK
RESOURCE AT LEAST PARTIALLY BASED ON THE TIMING ALIGNMENT
OFFSET

**FIG. 15**

1600

1610

SEND, TO A USER DEVICE, TIMING ALIGNMENT INFORMATION OF A
NETWORK RESOURCE ASSOCIATED WITH A CANDIDATE TARGET
NETWORK DEVICE OF A HANDOVER, TO ENABLE THE USER DEVICE
TO PERFORM THE TIMING ADVANCE ESTIMATION FOR THE NETWORK
RESOURCE

**FIG. 16**

1700

1710

RECEIVE, FROM A FIRST NETWORK DEVICE, A REQUEST FOR TIMING
ALIGNMENT INFORMATION OF A NETWORK RESOURCE

1720

SEND, TO THE FIRST NETWORK DEVICE, THE TIMING ALIGNMENT
INFORMATION

**FIG. 17**

**FIG. 18**

**FIG. 19**

Europäisches
Patentamt

European
Patent Office

Office européen
des brevets

# EUROPEAN SEARCH REPORT

**Application Number**

EP 24 20 4733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 418 769 A1 (NOKIA TECHNOLOGIES OY [FI]) 21 August 2024 (2024-08-21) | 15 | INV.<br>H04W36/00 |
| Y | * paragraphs [0007] - [0008], [0016], | 1 | H04W56/00 |
| A | [0025], [0085] *<br>* paragraphs [0109] - [0111], [0114] -<br>[0117], [0122] * | 2-14 | |
| | ----- | | |
| X | US 2023/090914 A1 (CHA HYUNSU [KR] ET AL) 23 March 2023 (2023-03-23) | 10,15 | |
| Y | * paragraphs [0132], [0167], [0176] - | 1 | |
| A | [0184] *<br>* paragraphs [0259] - [0261], [0265] -<br>[0269] *<br>* paragraphs [0310] - [0312], [0318],<br>[0320], [0326], [0346], [0377], [0415]<br>* | 2-9,<br>11-14 | |
| | ----- | | |
| X | WO 2024/113692 A1 (ZTE CORP [CN])<br>6 June 2024 (2024-06-06) | 15 | |
| A | * paragraphs [0030], [0034], [0042] -<br>[0054] *<br>* paragraphs [0059], [0067], [0070] * | 1-14 | **TECHNICAL FIELDS SEARCHED (IPC)**<br><br>H04W |
| | ----- | | |

The present search report has been drawn up for all claims

| Place of search | Date of completion of the search | Examiner |
|---|---|---|
| Munich | 19 March 2025 | Aulló Navarro, A |

EPO FORM 1503 03.82 (P04C01)

## ANNEX TO THE EUROPEAN SEARCH REPORT
## ON EUROPEAN PATENT APPLICATION NO.

EP 24 20 4733

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2025

| Patent document cited in search report | | Publication date | Patent family member(s) | | Publication date |
|---|---|---|---|---|---|
| EP 4418769 | A1 | 21-08-2024 | EP | 4418769 A1 | 21-08-2024 |
| | | | US | 2024357528 A1 | 24-10-2024 |
| US 2023090914 | A1 | 23-03-2023 | US | 2023090914 A1 | 23-03-2023 |
| | | | WO | 2021162514 A1 | 19-08-2021 |
| WO 2024113692 | A1 | 06-06-2024 | NONE | | |

EPO FORM P0459

For more details about this annex : see Official Journal of the European Patent Office, No. 12/82